# EUROPEAN PATENT SPECIFICATION

(11) **EP 3 115 284 B1**
(45) Date of publication and mention of the grant of the patent: **25.07.2018**
(21) Application number: 16176455.0
(22) Date of filing: 27.06.2016
(51) Int. Cl.: B60R 25/24, B62H 5/00

(54) **STRADDLED-VEHICLE AUTHENTICATION SYSTEM AND STRADDLED VEHICLE**
GRÄTSCHSITZAUTHENTIFIZIERUNGSSYSTEM UND GRÄTSCHSITZFAHRZEUG
SYSTÈME D'AUTHENTIFICATION DE VÉHICULE À CALIFOURCHON ET UN TEL VÉHICULE

(30) Priority: 09.07.2015 JP 2015137591
(43) Date of publication of application: 11.01.2017
(73) Proprietor: Yamaha Hatsudoki Kabushiki Kaisha, Iwata-shi, Shizuoka 438-8501 (JP); Asahi Denso Co., Ltd., Hamamatsu-shi Shizuoka 434-0046 (JP)
(72) Inventor: Maekawa, Koji, Iwata-shi, Shizuoka 438-8501 (JP); Morikuni, Daichi, Hamamatsu-shi, Shizuoka 434-0046 (JP); Ota, Mitsuhiro, Hamamatsu-shi, Shizuoka 434-0046 (JP); Ikeda, Takeshi, Iwata-shi, Shizuoka 438-8501 (JP)
(74) Representative: Zimmermann, Tankred Klaus

(56) References cited:
- EP-A1- 1 547 912
- EP-A1- 1 591 329
- EP-A1- 2 055 874
- DE-A1- 10 125 064
- JP-A- H0 953 352
- JP-A- H06 305 464
- JP-A- 2001 342 768
- JP-A- 2008 230 293
- US-A1- 2004 090 306
- US-A1- 2006 238 295
- US-A1- 2006 238 296
- US-A1- 2007 214 849
- US-A1- 2007 247 280

## Description

### [TECHNICAL FIELD]

The present invention relates to a straddled-vehicle authentication system and a straddled vehicle.

### [BACKGROUND ART]

For example, JP 2008-230293 A discloses a motorcycle including a smart key system. The smart key system is configured to, in response to pushing of a main switch provided in the motorcycle, check whether or not an ID code supplied from a portable transmitter matches a vehicle code. Upon matching of them, a main power source is turned on, and an engine is enabled to start. In this state, a seat lock is released in response to pushing a switch provided in the motorcycle, which is different from the main switch.

US 2006/238296 A1 describes a vehicle electronic key system which performs mutual radio communication between a portable device carried by a user and a vehicle-mounted device to verify an ID of the portable device. A main switch can be switched in turn among the following positions: a LOCK position which causes the rotation shaft of a handlebar to be locked, a PUSH position which causes two-way authentication communication with the portable device, an OFF position which causes the engine to stop and is reached when the portable device is authenticated, and an ON position which causes power to be supplied from the vehicle-mounted battery and causes the engine to start.

### [SUMMARY OF THE INVENTION]

### [OBJECT]

An object of the present invention is to provide a straddled-vehicle authentication system and a straddled vehicle that achieve suppression of an increase in power consumption while performing an authentication in the straddled vehicle using a portable device, and that also achieve suppression of an increase in the size of the straddled vehicle which may otherwise result from an increase in the size of a battery.

This object is achieved by a straddled-vehicle authentication system and a straddled vehicle as defined in the independent claims.

### [PROBLEMS TO BE SOLVED BY THE INVENTION]

The smart key system disclosed in JP 2008-230293 A enables an authentication system using a portable device to be adopted for a straddled vehicle having switches exposed to the outside.

The smart key system disclosed in JP 2008-230293 A uses power from a battery mounted in the straddled vehicle. This is why the straddled vehicle equipped with the smart key system has higher power consumption from the battery.

In straddled vehicles typified by motorcycles, a battery occupies a large proportion of the size and the weight of a vehicle body, and therefore minimizing the electrical capacity of the battery is desired.

Mounting the smart key system to the straddled vehicle, however, leads to an increased power consumption, which requires an increased electrical capacity of the battery. An increase in the size of the battery results in a problem due to an increase in the size of the straddled vehicle.

### [MEANS FOR SOLVING THE PROBLEMS]

To solve the problems described above, the present invention can adopt the following configurations.

(1) A straddled-vehicle authentication system for a straddled vehicle, the straddled-vehicle authentication system comprising:
   a power unit control unit configured to control a power unit, the power unit control unit provided in the straddled vehicle, the power unit provided in the straddled vehicle and configured to drive the straddled vehicle;
   a portable device configured to be used for an authentication to use the straddled vehicle via a wireless communication, the portable device being physically separate from the straddled vehicle;
   an authentication control unit configured to perform the authentication to use the straddled vehicle by communicating with the portable device, the authentication control unit provided in the straddled vehicle; and
   a main operation part configured to receive an operation for switching states of the power unit control unit and the authentication control unit, the main operation part provided in the straddled vehicle so as to be at least partially exposed to the outside of the straddled vehicle,
   the straddled-vehicle authentication system being configured such that the state of the straddled-vehicle authentication system is switchable from a handlebar locked state to an OFF state, and from the OFF state, through at least an authentication verifying state and an authentication verified state, to a power-unit ON state, wherein
   the OFF state is a state entered by a transition from the handlebar locked state, the transition caused by a displacement of the main operation part, the displacement caused in response to a load generated by an operation applied to the main operation part in the handlebar locked state, the OFF state being a state in which a power source of the power unit control unit is off and no authentication is performed by the authentication control unit,
   the authentication verifying state is a state entered by a transition from the OFF state, the transition caused by a displacement of the main operation part, the displacement caused in response to a load applied to the main operation part in the OFF state, the authentication verifying state causing the authentication control unit to perform an authentication verifying operation,
   the authentication verified state is a state entered by a transition from the authentication verifying state, the transition caused by a displacement of the main operation part, the displacement caused in response to a load generated by an operation applied to the main operation part in a state where authentication performed by the authentication control unit has been verified in the authentication verifying state, the authentication verified state being a state in which the power source of the power unit control unit is off and the authentication performed by the authentication control unit has been verified, and
   the power-unit ON state is a state entered by a transition from the authentication verified state, the transition caused by a displacement of the main operation part, the displacement caused in response to a load applied to the main operation part in the authentication verified state, the power-unit ON state being a state in which the power source of the power unit control unit is on and the authentication performed by the authentication control unit has been verified.

In the straddled-vehicle authentication system of (1), the power unit control unit controls the power unit that drives the straddled vehicle. The authentication control unit performs the authentication to use the straddled vehicle by communicating with the portable device. The main operation part receives the operation for switching the states of the power unit control unit and the authentication control unit. The authentication using the portable device is performed in response to the operation applied to the main operation part which is exposed to the outside of the straddled vehicle.

The straddled-vehicle authentication system of (1) has its state switchable from the OFF state, through at least the authentication verifying state and the authentication verified state, to the power-unit ON state.

Applying a load or a load application operation to the main operation part in the OFF state causes the main operation part to be displaced so that the state of the straddled-vehicle authentication system transitions from the OFF state to the authentication verifying state. In the authentication verifying state, the authentication performed by the authentication control unit is verified, and in this condition, the load application operation is applied to the main operation part to cause the main operation part to be displaced. As a result, the state of the straddled-vehicle authentication system transitions to the authentication verified state. In the authentication verified state, the load application operation is applied to the main operation part so that the main operation part is displaced. This causes the state of the straddled-vehicle authentication system to transition from the authentication verified state to the power-unit ON state.

In the straddled-vehicle authentication system of (1), the authentication verified state is provided between the authentication verifying state and the power-unit ON state. The authentication verified state is different from both the authentication verifying state and the power-unit ON state. The authentication verified state can be maintained by operating the main operation part so as to bring the straddled-vehicle authentication system into the authentication verified state and not applying any further operation to the main operation part.

In the power-unit ON state, the power source of the power unit control unit is on, and the power unit control unit controls the power unit. In the authentication verified state, on the other hand, the power source of the power unit control unit is off, and therefore power consumption is reduced as compared with the power-unit ON state. Since the authentication verified state is a state after the authentication performed by the authentication control unit is verified, power consumption is reduced as compared with the authentication verifying state in which the authentication control unit performs the authentication verifying operation.

The straddled-vehicle authentication system of (1) consumes less power from the battery, because the straddled-vehicle authentication system can be brought into the authentication verified state through an operation. The authentication verified state, which is provided between the authentication verifying state and the power-unit ON state, has less power consumption.

Accordingly, the straddled-vehicle authentication system of (1) achieves a suppression of an increase in power consumption while performing authentication in the straddled vehicle using the portable device, and also achieves a suppression of an increase in the size of the straddled vehicle which may otherwise result from an increase in the size of the battery.

Examples of the load application operation applied to the main operation part include rotating the main operation part, pushing the main operation part, and combinations of them. For example, pushing the main operation part in the OFF state causes the authentication state to transition from the OFF state to the authentication verifying state. A rotation operation applied to the main operation part in the state where the authentication has been verified causes the authentication state transition from the authentication verifying state to the authentication verified state. It may be conceivable that, for example, re-pushing the main operation part causes the state of the straddled-vehicle authentication system to transition from the authentication verifying state to the authentication verified state. It may be also conceivable that, for example, a rotation operation applied to the main operation part causes the state of the straddled-vehicle authentication system to transition from the OFF state to the authentication verifying state.
(2) The straddled-vehicle authentication system according to (1), wherein
   the authentication verified state is a state in which traveling of the straddled vehicle is disabled.
   In the straddled-vehicle authentication system of (2), the authentication verified state is a state that disables traveling of the straddled vehicle. In the state that disables traveling of the straddled vehicle, a device configured to operate the power unit can be stopped. Accordingly, the straddled-vehicle authentication system of (2) achieves a further suppression of an increase in power consumption while performing authentication in the straddled vehicle using the portable device, and also achieves a further suppression of an increase in the size of the straddled vehicle which may otherwise result from an increase in the size of the battery.
(3) The straddled-vehicle authentication system according to (1) or (2), wherein
   the main operation part includes a rotation mechanism configured to be rotated by receiving a rotation operation,
   a rotation of the main operation part causes the state of the straddled-vehicle authentication system to be switched from the authentication verifying state to the authentication verified state, the rotation caused in response to a rotation operation applied to the main operation part in the state where the authentication performed by the authentication control unit has been verified in the authentication verifying state.
   In the straddled-vehicle authentication system of (3), the main operation part is rotated by the rotation operation, so that the state of the straddled-vehicle authentication system is switched to the authentication verified state. Since the state of the main operation part is recognizable based on the rotation position, it is easy to visually recognize the switching to the authentication verified state.
(4) The straddled-vehicle authentication system according to any one of (1) to (3), wherein
   the main operation part includes a main displacement block portion configured to block the main operation part from being displaced by a load applied to the main operation part in order to transition the state of the straddled-vehicle authentication system from the authentication verifying state to the authentication verified state, the blocking being effected depending on a result of the authentication performed by the authentication control unit,
   upon verification of the authentication performed by the authentication control unit, the main displacement block portion is configured to release the blocking of the main operation part against a displacement.
   The straddled-vehicle authentication system of (4) is configured such that, in the authentication verifying state, a rider applies an operation for causing a state transition from the authentication verifying state to the authentication verified state. The rider is able to complete the operation if the authentication is verified in the authentication verifying state. If the authentication is not verified in the authentication verifying state, the main operation part is blocked against displacement, so that the rider fails to complete the operation. All of these operations are operations that apply a load to the main operation part to displace the main operation part. Therefore, when a sequence of these operations cannot be completed, the rider feels a feedback due to the blocked operations, which allows the rider to intuitively recognize that the verification of the authentication failed. When the sequence of operations is successfully completed, the rider feels a feedback as the operations were completed without any blocking, which allows the rider to intuitively recognize that the verification of the authentication is successful. This suppresses the occurrence of a situation in which the rider, who cannot recognize whether or not the authentication is successful, repeats an authentication operation so that power consumption is increased. Accordingly, an increase in the size of the battery can be further suppressed.
(5) The straddled-vehicle authentication system according to any one of (1) to (4), wherein
   the straddled-vehicle authentication system is configured to perform a re-authentication within a time period when the straddled-vehicle authentication system is in the power-unit ON state after the state of the straddled-vehicle authentication system transitions from the authentication verified state to the power-unit ON state, the re-authentication comprising or consisting of the authentication performed between the authentication control unit and the portable device and a further authentication performed between the authentication control unit and the power unit control unit,
   the power unit control unit is configured to allow operation of the power unit upon verification of the re-authentication,
   the straddled-vehicle authentication system is configured to, until elapse of a predetermined time since the state of the straddled-vehicle authentication system transitioned from the power-unit ON state to the authentication verified state, permit the state of the straddled-vehicle authentication system to return to the power-unit ON state and permit the power unit control unit to allow operation of the power unit without the re-authentication.
   The straddled-vehicle authentication system of (5), in which the power unit is made operable upon verification of the re-authentication, provides further enhanced security. In addition, even when the rider who lost the portable device applies an operation so as to bring the straddled-vehicle authentication system back into the authentication verified state, the power unit is made operable without use of the portable device as long as the predetermined time has not yet elapsed. Accordingly, improved convenience as well as the enhanced security is obtained.
(6) The straddled-vehicle authentication system according to any one of (1) to (5), including a sub operation part arranged adjacent to the main operation part, the sub operation part configured to open an open/close part provided in the straddled vehicle and being displaceable by a load applied thereto, wherein
   the main operation part includes a sub block portion arranged in a position to block the sub operation part against a displacement when the main operation part is in a position corresponding to the authentication verifying state or the OFF state,
   the main operation part is configured such that displacement of the main operation part from the position corresponding to the authentication verifying state to a position corresponding to the authentication verified state causes the sub block portion to be withdrawn from the position that blocks the sub operation part against a displacement.
   In the straddled-vehicle authentication system of (6), opening the open/close part provided in the straddled vehicle is enabled by displacing the sub operation part through an operation. Displacing the sub operation part is enabled by displacing the main operation part from the position corresponding to the authentication verifying state to the position corresponding to the authentication verified state. Since enabling the open/close part to be opened is based on the authentication including the communication with the portable device, high security is provided. Furthermore, the displacement of the sub operation part for opening the open/close part is determined by the position of the block portion which depends on a displacement of the main operation part caused by the operation. This eliminates the need for any dedicated actuator for blocking the sub operation part against a displacement. Accordingly, the straddled-vehicle authentication system of (6) achieves a further suppression of an increase in power consumption with enhanced security of the open/close part, and also achieves a further suppression of an increase in the size of the straddled vehicle which may otherwise result from an increase in the size of the battery.
(7) A straddled vehicle including:
   the straddled-vehicle authentication system according to any one of (1) to (6); and
   a power unit that drives the straddled vehicle.

The straddled vehicle of (7), which is equipped with the above-described straddled-vehicle authentication system, achieves a suppression of an increase in power consumption while performing authentication using the portable device, and also achieves a suppression of an increase in the size of the straddled vehicle which may otherwise result from an increase in the size of the battery.

### [EFFECTS OF THE INVENTION]

The straddled-vehicle authentication system of the present invention achieves a suppression of an increase in power consumption while performing authentication in the straddled vehicle using a portable device, and also achieves a suppression of an increase in the size of the straddled vehicle which may otherwise result from an increase in the size of the battery.

### [BRIEF DESCRIPTION OF THE DRAWINGS]

[Fig. 1] Fig. 1 is a side view of a straddled vehicle equipped with a straddled-vehicle authentication system according to an embodiment of the present invention.
[Fig. 2] Fig. 2 is a front view showing an external appearance of an operation unit shown in Fig. 1.
[Fig. 3] Fig. 3 is a longitudinal cross-sectional view showing a cross-section of the operation unit of Fig. 2 as sectioned along a shaft thereof.
[Fig. 4] Fig. 4 is an exploded perspective view showing a configuration of the operation unit.
[Fig. 5] Fig. 5 is a state transition diagram illustrating the states of the straddled-vehicle authentication system shown in Fig. 1.
[Fig. 6] Fig. 6(A) is a longitudinal cross-sectional view schematically showing a main operation part in an OFF state; Fig. 6(B) is a longitudinal cross-sectional view schematically showing the main operation part in an authentication verifying state; and Fig. 6(C) is a longitudinal cross-sectional view schematically showing the main operation part in an authentication verified state .
[Fig. 7] Fig. 7(A) is a transverse cross-sectional view showing a solenoid cam and a solenoid part in the OFF state; Fig. 7(B) is a transverse cross-sectional view showing the solenoid cam and the solenoid part in the authentication verifying state; and Fig. 7(C) is a transverse cross-sectional view showing the solenoid cam and the solenoid part in the authentication verified state.
[Fig. 8] Fig. 8(A) is a transverse cross-sectional view showing a locking plate and a locking cam in the authentication verifying state; and Fig. 8(B) is a transverse cross-sectional view showing the locking plate and the locking cam in the authentication verified state.

### [EMBODIMENTS FOR CARRYING OUT THE INVENTION]

Studies carried out by the present inventors on a straddled-vehicle authentication system for use in a straddled vehicle will be described.

For example, in a straddled vehicle as typified by the motorcycle shown in JP 2008-230293 A, unlike in a four-wheeled motor vehicle having a vehicle cabin and a door, an operation unit including a switch and the like is exposed to the outside.

A smart key system that adopts a communication with a portable device provides a high degree of security due to the complexity and the high confidentiality of the authentication information. Therefore, applying an authentication system that adopts a communication with a portable device to a straddled vehicle achieves an enhanced security of the straddled vehicle whose operation unit is exposed to the outside.

The smart key system as shown in JP 2008-230293 A consumes power because it electronically performs a communication with the portable device and the authentication operation. This is why a vehicle equipped with the smart key system consumes a large amount of power. Such authentication, which is generally performed while an engine and a power generator are stopped, consumes power from a battery.

In the straddled vehicle, the battery occupies a large proportion of the size and of weight of a vehicle body, and therefore minimizing the electrical capacity of the battery is desired.

Mounting the smart key system to the straddled vehicle, however, leads to an increase in power consumption, which requires an increased electrical capacity of the battery. An increase in the size of the battery results in a problem due to an increase in the size of the straddled vehicle.

The smart key system as shown in JP 2008-230293 A is configured such that the main power source is turned on to make the engine ready for start if the ID code received from the portable transmitter matches the vehicle code. In this condition, the seat lock is released in response to an operation applied to a switch other than the main switch. Here, the operation for releasing the seat lock is applied to the switch while the engine is ready for start. Although the engine and the power generator are not operated, a control device for controlling the engine and accessory equipment of the engine is consuming power, resulting in a high power consumption. Therefore, a further increase in the electrical capacity of the battery is required, which may result in an increase in the size of the straddled vehicle.

The present inventors studied the above-described problem. In general, releasing a fuel-lid lock and a seat lock needs to be performed after authentication in terms of security. In many cases, however, releasing the fuel-lid lock and the seat lock is performed while a power unit is not in operation.

The present inventors have found out that an enhanced security of the straddled vehicle and a downsizing of the straddled vehicle can be obtained by: providing an authentication verified state between an authentication verifying state and a power-unit ON state of the main operation part; and enabling the states to be switched through an operation.

In this configuration, in order to operate a function that requires verification of the authentication in a situation where the power unit needn't be operated, an operation for switching the state of the main operation part to the authentication verified state is applied, and no more operation is applied to the main operation part, so that the authentication verified state is maintained. For example, setting the function that requires verification of authentication to be operable in the authentication verified state provides enhanced security. The authentication verified state consumes less power than the power-unit ON state and the authentication verifying state, and therefore less power consumption in the battery of the straddled vehicle is achieved.

The present invention achieves a suppression of an increase in the power consumption as well as enhanced security of a straddled vehicle by performing authentication using a portable device, and also achieves a suppression of an increase in the size of the straddled vehicle which may otherwise result from an increase in the size of a battery.

Hereunder, the present invention will be described based on a preferred embodiment with reference to the drawings.

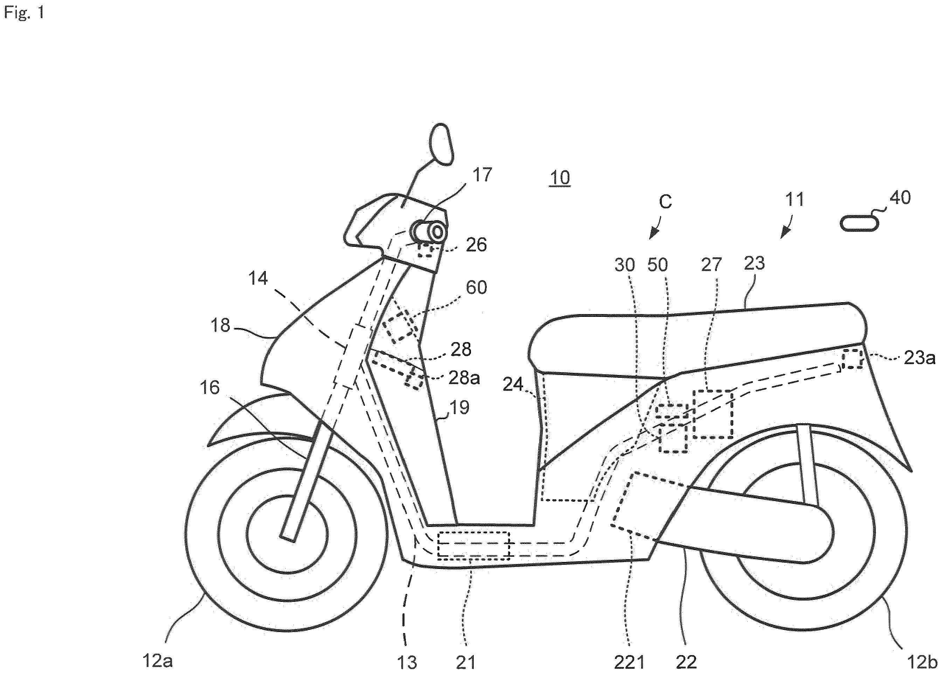

Fig. 1 is a side view of a straddled vehicle equipped with a straddled-vehicle authentication system according to an embodiment of the present invention.

A straddled vehicle 10 shown in Fig. 1 is a motorcycle. The straddled vehicle 10 includes a vehicle body 11 and two wheels 12a, 12b. The vehicle body 11 has a vehicle body frame 13 provided with a head pipe 14. The head pipe 14 supports a front fork 16. The front fork 16 rotatably supports the front wheel 12a. The front fork 16 is supported by the head pipe 14 so as to be steerable through handlebars 17 that are arranged above the head pipe 14.

A front cover 18 for covering a front part of the head pipe 14 is provided in front of the head pipe 14. A leg cover 19 for covering a rear part of the head pipe 14 is provided in the rear of the head pipe 14.

The leg cover 19 has a fuel lid 28 for access to a fuel filler opening (not shown) of a fuel tank 21. The fuel lid 28 provided in the leg cover 19 is openable and closable. The leg cover 19 has a lid lock 28a for locking the fuel lid 28. The fuel lid 28 is openable when the lid lock 28a is unlocked.

The straddled vehicle 10 includes a power unit 22 and a battery 27. The power unit 22 includes an engine 221. The power unit 22 supports the rear wheel 12b. The power unit 22 drives the rear wheel 12b, to drive the straddled vehicle 10. One of the handlebars 17 has a start switch 26 for starting the engine 221.

The vehicle body 11 of the straddled vehicle 10 includes a seat 23 on which a rider is seated. A storage box 24 is provided under the seat 23. The seat 23 is supported by the vehicle body 11 in an openable and closable manner. The vehicle body 11 of the straddled vehicle 10 has a seat lock 23a for locking the seat 23. When the seat lock 23a is unlocked, the seat 23 is openable to allow access to the inside of the storage box 24.

The seat 23 and the fuel lid 28 correspond to one example of the open/close part provided in the straddled vehicle 10.

### [Straddled-vehicle Authentication System]

The straddled vehicle 10 includes a straddled-vehicle authentication system C. The straddled-vehicle authentication system C includes a power unit control unit 30, a portable device 40, an authentication control unit 50, and an operation unit 60.

The power unit control unit 30 is provided in the straddled vehicle 10. The power unit control unit 30 controls the power unit 22. The power unit control unit 30 controls a fuel injection and an ignition timing of the engine 221. The power unit control unit 30 also controls an operation of a pump (not shown) that supplies a fuel to the engine 221.

The portable device 40 is physically separate from the straddled vehicle 10. The portable device 40 is physically separate from the vehicle body 11 and the wheels 12a, 12b of the straddled vehicle 10. The portable device 40 includes a transceiver part (not shown). The portable device 40 is normally carried by the rider of the straddled vehicle 10. The portable device 40 is used for the authentication to use the straddled vehicle 10 via a wireless communication. The portable device 40 receives a request signal from the outside of the portable device 40, and transmits a response signal including a code that is stored in the portable device 40.

The authentication control unit 50 is provided in the straddled vehicle 10. The authentication control unit 50 includes a transceiver part (not shown). The authentication control unit 50 communicates with the portable device 40, to perform an authentication verifying operation about the use of the straddled vehicle 10. More specifically, the authentication control unit 50 wirelessly transmits the request signal to the portable device 40. The authentication control unit 50 checks the code represented by the response signal wirelessly transmitted from the portable device 40 in response to the request signal against a code that is pre-stored in association with the straddled vehicle 10. Upon matching of the codes, the authentication is verified. The authentication control unit 50 is communicably connected to the power unit control unit 30.

The operation unit 60 is provided in the straddled vehicle 10. The operation unit 60 is arranged inside the leg cover 19 provided in the rear of the head pipe 14. The operation unit 60 is partially exposed to the outside of the leg cover 19. That is, the operation unit 60 is provided in the straddled vehicle 10 such that the operation unit 60 is partially exposed to the outside of the straddled vehicle 10. The operation unit 60 receives operations inputted by the rider. Based on the operations received by the operation unit 60, the straddled vehicle 10 operates various parts of the straddled vehicle 10 or switches the state of the straddled vehicle 10.

The operation unit 60 also has a handlebar locking function for blocking the handlebars 17 against rotation.

Each of the power unit control unit 30 and the authentication control unit 50 includes an arithmetic unit and a storage device (not shown). Each of the power unit control unit 30 and the authentication control unit 50 implements functions by the arithmetic unit executing programs stored in the storage device.

### [Operation Unit]

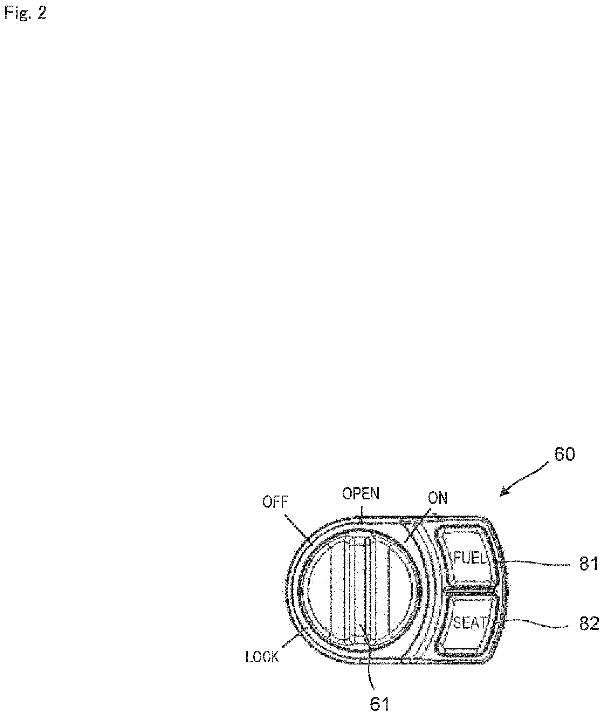

Fig. 2 is a front view showing an external appearance of the operation unit 60 shown in Fig. 1.

Fig. 2 illustrates a front part of the operation unit 60 exposed to the outside of the leg cover 19.

The operation unit 60 includes a main operation part 61 and sub operation parts 81,82.

The main operation part 61 and the sub operation parts 81, 82 receive operations for switching the state of the straddled vehicle 10. The main operation part 61 receives operations for switching the state of the straddled-vehicle authentication system C. The main operation part 61 receives operations for switching the states of the power unit control unit 30 and the authentication control unit 50.

Each of the main operation part 61 and the sub operation parts 81, 82 is provided in the straddled vehicle 10 such that it is partially exposed to the outside of the straddled vehicle 10. Each of the main operation part 61 and the sub operation parts 81, 82 is partially exposed to the outside of the leg cover 19.

The main operation part 61 of this embodiment is a rotary knob that is rotated by receiving a load produced by a rotation operation.

The main operation part 61 is displaceable among a LOCK position, an OFF position, an OPEN position, and an ON position. The main operation part 61 can also be pushed by receiving a pushing load.

The sub operation parts 81, 82 receive operations for opening the fuel lid 28 and the seat 23 provided in the straddled vehicle 10. The sub operation parts 81, 82 are displaced by a load application operation, to release the locking of the lid lock 28a and the seat lock 23a. The sub operation parts 81, 82 of this embodiment are push buttons that are pushed by receiving a load produced by a pushing operation.

The sub operation parts 81, 82 are arranged adjacent to the main operation part 61. No operation unit is arranged between the sub operation parts 81, 82 and the main operation part 61. The main operation part 61 is at an interval from the sub operation parts 81, 82, the interval being shorter than the width (diameter) of the main operation part 61 with respect to the direction in which the sub operation parts 81, 82 and the main operation part 61 are arranged side by side.

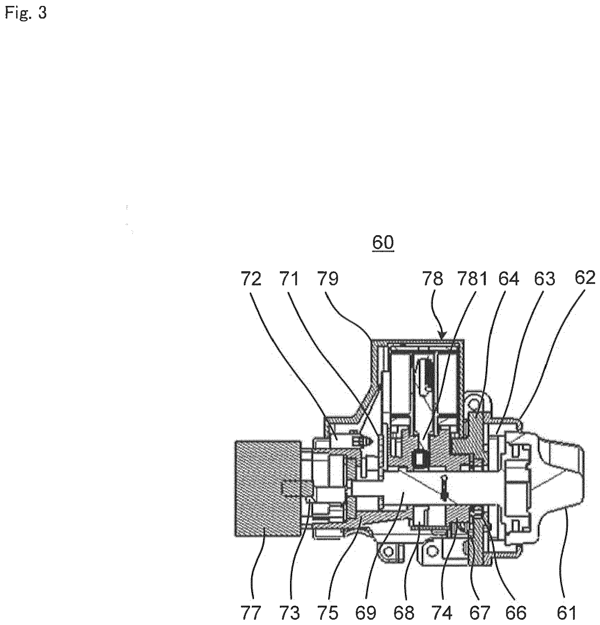

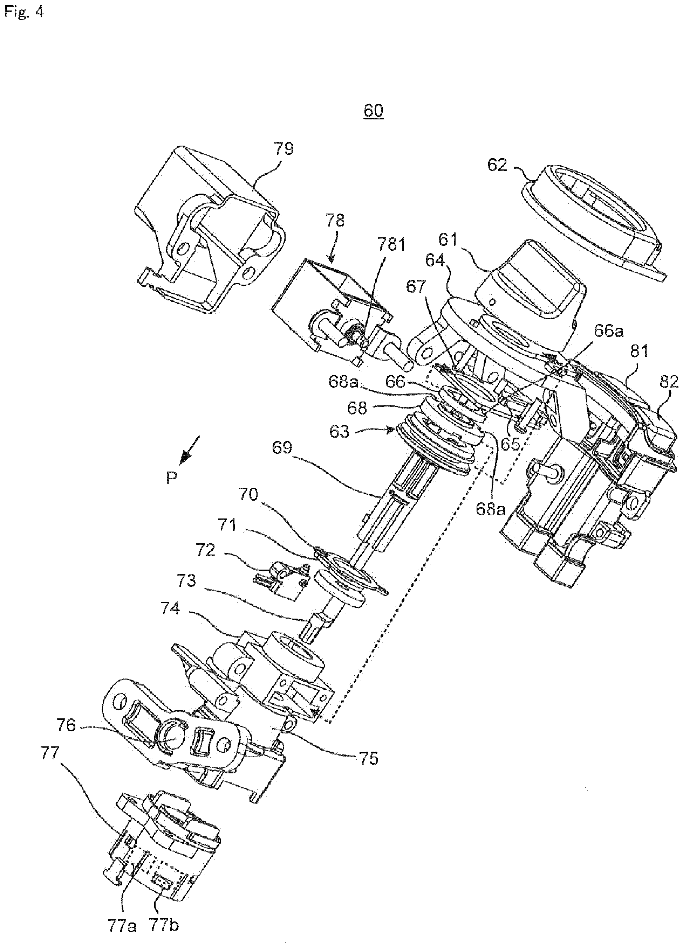

Fig. 3 is a longitudinal cross-sectional view showing a cross-section of the operation unit 60 of Fig. 2 as sectioned along a shaft 69 thereof. Fig. 4 is an exploded perspective view showing a configuration of the operation unit 60.

Fig. 3 shows a cross-section of the main operation part 61 of the operation unit 60. In Fig. 3, for clarity of the shapes of parts, hatching is partially not given. In Fig. 4, for clarity of the parts, the sequence of arrangement of the parts is different from the sequence of arrangement in an assembled state of Fig. 3.

The operation unit 60 of the straddled-vehicle authentication system C (see Fig. 1) of this embodiment includes the main operation part 61, a cover 62, a stopper part 63, a plate casing 64, a locking plate 65 (see Fig. 4), a locking cam 66, a cover plate 67, a solenoid cam 68, the shaft 69, a washer 70 (see Fig. 4), a pressing piece 71, a request switch 72, a locking crank 73, a cam casing 74, a cylinder body 75, a handlebar locking pin 76 (see Fig. 4), a switch storage part 77, a solenoid part 78, and a solenoid cover 79. The switch storage part 77 of the operation unit 60 includes an open switch 77a and a main switch 77b, as shown in Fig. 4.

The main operation part 61 is displaced by a load application operation, e.g. by applying a load thereto.

The shaft 69 is attached to the main operation part 61. The shaft 69 is displaceable integrally with the main operation part 61. The shaft 69 functions as a rotation mechanism provided to the main operation part 61. The shaft 69 is provided to the main operation part 61 such that the main operation part 61 is rotatable upon reception of a rotation operation.

The displacement of the main operation part 61 upon operation includes a movement in a pushing direction P and a rotation about the shaft 69. The pushing direction P is the direction oriented from the main operation part 61 toward the plate casing 64. The pushing direction P is the direction directed from the front of the operation unit 60, which is exposed to the outside, toward the inside of the leg cover 19.

The main operation part 61 is rotated together with the shaft 69 upon reception of a load produced by the rotation operation about the shaft 69.

The pressing piece 71 is attached to the shaft 69 so as to be movable in the pushing direction P along with a movement of the shaft 69 in the pushing direction P.

When the main operation part 61 is pushed in the pushing direction P, the pressing piece 71 pushes the request switch 72 to actuate the request switch 72. The request switch 72 supplies a signal indicative of a pushed state of the main operation part 61 to the authentication control unit 50.

The stopper part 63 biases the main operation part 61 in the direction opposite to the pushing direction P. Once the main operation part 61 pushed in the pushing direction P is released from the pushing load in the pushing direction P, the main operation part 61 is displaced back in the direction opposite to the pushing direction P.

The locking cam 66, the solenoid cam 68, and the locking crank 73 are attached to the shaft 69 so as to be rotatable along with a rotation of the main operation part 61 and the shaft 69.

The solenoid cam 68 is housed in the cam casing 74. The solenoid cam 68 has grooves 68a. The grooves 68a are formed in a circumferential surface of the solenoid cam 68. The solenoid cam 68 of this embodiment has the grooves 68a formed in positions corresponding to the LOCK position and the OFF position of the main operation part 61.

The solenoid part 78 has a latch portion 781 that is fittable into the groove 68a of the solenoid cam 68. The latch portion 781 is integral with a plunger of the solenoid part 78. The solenoid part 78 is constituted of a pull-type solenoid. The latch portion 781 is biased toward the solenoid cam 68 by a biasing member (not shown) provided in the solenoid part 78.

The solenoid part 78 and the latch portion 781 correspond to one example of the main displacement block portion provided in the main operation part of the present invention.

Whether or not to render the solenoid part 78 conducting is controlled by the authentication control unit 50.

When the solenoid part 78 is not conducting, the latch portion 781 of the solenoid part 78 fits in the groove 68a of the solenoid cam 68. In the state where the latch portion 781 fits in the groove 68a of the solenoid cam 68, the main operation part 61 is blocked against rotation. The solenoid part 78 and the latch portion 781 block the main operation part 61 against displacement.

When the solenoid part 78 is conducting, the latch portion 781 is withdrawn from the groove 68a of the solenoid cam 68. As a result, the main operation part 61 is permitted to rotate. That is, the solenoid part 78 and the latch portion 781 release the blocking of the main operation part 61 against displacement. This makes the main operation part 61 displaceable.

The solenoid part 78 blocks the main operation part 61 against displacement in accordance with a result of the authentication performed by the authentication control unit 50. Whether or not to render the solenoid part 78 conducting is controlled in accordance with the result of the authentication performed by the authentication control unit 50. The solenoid part 78 and the latch portion 781 block the main operation part 61 against displacement in accordance with the result of the authentication performed by the authentication control unit 50. If the authentication performed by the authentication control unit 50 is verified, the solenoid part 78 and the latch portion 781 release the blocking of the main operation part 61 against displacement.

Whether the main operation part 61 is permitted to rotate only when the solenoid part 78 is conducting or the main operation part 61 is permitted to rotate irrespective of a conduction of the solenoid part 78 depends on the location of the groove 68a in the solenoid cam 68 with respect to the latch portion 781, i.e. whether the latch portion is in the groove 68a (rotation permitted only when the solenoid part 78 is conducting) or is not in the groove 68a (rotation permitted irrespective the solenoid part 78 being conducting or not).

The locking cam 66 is arranged between the plate casing 64 and the cover plate 67. The locking cam 66 is in cam engagement with the locking plate 65. The locking cam 66 has a cam groove 66a. The locking plate 65 functions as a cam follower of the locking cam 66.

The locking plate 65 and the locking cam 66 correspond to one example of the sub block portion of the present invention.

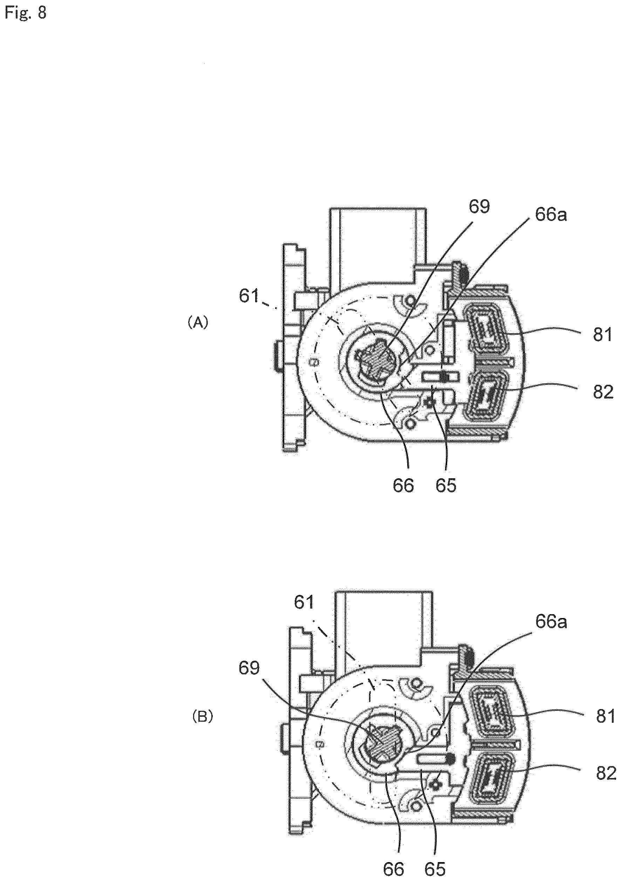

When the locking cam 66 rotates along with a rotation of the main operation part 61, the locking plate 65 moves between a block position and a withdrawn position in accordance with the position of the locking cam 66. When the locking plate 65 is in the block position, the sub operation parts 81, 82 are blocked against displacement. When the locking plate 65 is in the withdrawn position, the sub operation parts 81, 82 are permitted to displace. The operation of the locking plate 65 will be detailed later with reference to Fig. 8(A) and Fig. 8(B).

The operation unit 60 has a handlebar locking function for blocking the handlebars 17 against operation. While the main operation part 61 is rotating to the LOCK position, the locking crank 73 rotates together with the main operation part 61, so that the handlebar locking pin 76 is pushed out to a position that blocks the handlebars 17 against rotation.

The open switch 77a and the main switch 77b are stored in the switch storage part 77. When the main operation part 61 is in the OPEN position (see Fig. 2), the open switch 77a is actuated. The open switch 77a supplies a signal indicating that the main operation part 61 has been displaced to the OPEN position to the authentication control unit 50. When the main operation part 61 is in the ON position (see Fig. 2), the main switch 77b is actuated. The main switch 77b supplies a signal indicating that the main operation part 61 has been displaced to the ON position to the authentication control unit 50.

The signals supplied from the request switch 72, the open switch 77a, and the main switch 77b allow the authentication control unit 50 to recognize the state of the straddled-vehicle authentication system C based on displacement of the main operation part 61. The authentication control unit 50 controls the conduction of the solenoid part 78, in order to control displacement of the main operation part 61 caused by operations.

### [Sub Operation Part]

The sub operation parts 81, 82 are displaced by load application operations. The sub operation parts 81, 82 of this embodiment are push buttons that are pushed in the pushing direction P by receiving a pushing load in the pushing direction P. A wire (not shown) is connected between the sub operation part 81 and the lid lock 28a. When the sub operation part 81 receiving a load is displaced, the displacement is transmitted through the wire, so that the locking of the lid lock 28a is released.

A wire (not shown) is also connected between the sub operation part 82 and the seat lock 23a. When the sub operation part 82 receiving a load is displaced, the displacement is transmitted through the wire, so that the locking of the seat lock 23a is released. This allows opening of the seat 23.

The sub operation parts 81, 82 operate the lid lock 28a and the seat lock 23a not by an electromotive force but by transmitting the pushing loads received by the sub operation parts 81, 82 and the displacements thereof to the lid lock 28a and the seat lock 23a. Accordingly, no power is consumed for releasing the lid lock 28a and the seat lock 23a.

### [States of Straddled-vehicle Authentication System]

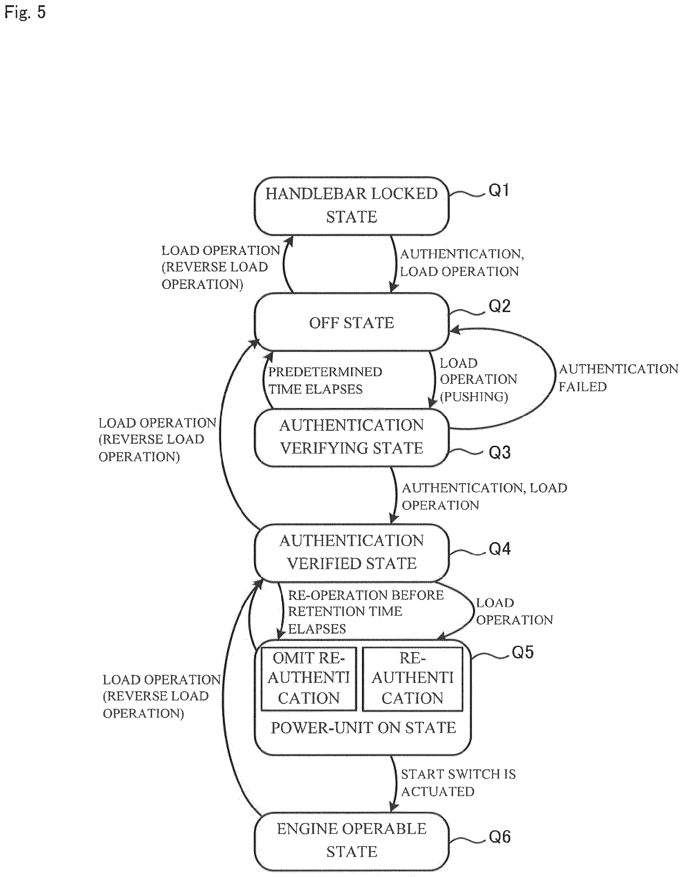

Fig. 5 is a state transition diagram illustrating states of the straddled-vehicle authentication system C shown in Fig. 1. In the state transition diagram of Fig. 5, each box represents a state of the straddled-vehicle authentication system C. Each of the arrows connecting the boxes represents a transition of the state of the straddled-vehicle authentication system C. In Fig. 5, the arrow is accompanied with a corresponding transition condition.

Fig. 5 also shows operations of the authentication control unit 50 and the power unit control unit 30.

The straddled-vehicle authentication system C has a handlebar locked state Q1, an OFF state Q2, an authentication verifying state Q3, an authentication verified state Q4, a power-unit ON state Q5, and an engine operable state Q6. In Fig. 5, for convenience of description, the handlebar locked state Q1 is illustrated to be separate from the OFF state Q2. In the handlebar locked state Q1, a power source of the power unit control unit 30 is off and no authentication is performed by the authentication control unit 50. Therefore, the handlebar locked state Q1 is included in the OFF state Q2. That is, when the straddled-vehicle authentication system C is in the handlebar locked state Q1, the straddled-vehicle authentication system C is actually both in the handlebar locked state Q1 and in the OFF state Q2.

In Fig. 5, for convenience of description, the engine operable state Q6 is illustrated to be separate from the power-unit ON state Q5. In the engine operable state Q6, the power source of the power unit control unit 30 is on and the authentication performed by the authentication control unit 50 has been verified. Therefore, the engine operable state Q6 is included in the power-unit ON state Q5. That is, when the straddled-vehicle authentication system C is in the engine operable state Q6, the straddled-vehicle authentication system C is actually both in the power-unit ON state Q5 and in the engine operable state Q6.

The handlebar locked state Q1, the OFF state Q2, the authentication verified state Q4, and the power-unit ON state Q5 correspond to the LOCK position, the OFF position, the OPEN position, and the ON position, respectively, of the main operation part 61 shown in Fig. 2. The OFF state Q2 and the authentication verifying state Q3 correspond commonly to the OFF position of Fig. 2. The OFF state Q2 and the authentication verifying state Q3, however, are different from each other in terms of the status of displacement of the main operation part 61, which depends on whether or not the main operation part 61 has been pushed in the pushing direction P.

The state of the straddled-vehicle authentication system C is switchable from the OFF state Q2 through the authentication verifying state Q3 and the authentication verified state Q4 to the power-unit ON state Q5.

The relationship among the state of the straddled-vehicle authentication system C, the operation of the authentication control unit 50, the state of the power source of the power unit control unit 30, and the position of the main operation part 61 (see Fig. 2) is, for example, as follows.

| State of straddled-vehicle authentication system C | Operation of authentication control unit 50 | State of power source of power unit control unit 30 | Position |
|---|---|---|---|
| OFF state (including handlebar locked state) | No operation | Off | OFF (LOCK) |
| Authentication verifying state | Verifying operation | Off | OFF |
| Authentication verified state | No operation (authentication has been verified) | Off | OPEN |
| Power-unit ON state (including engine operable state) | Re-authentication (authentication has been verified) | On | ON |

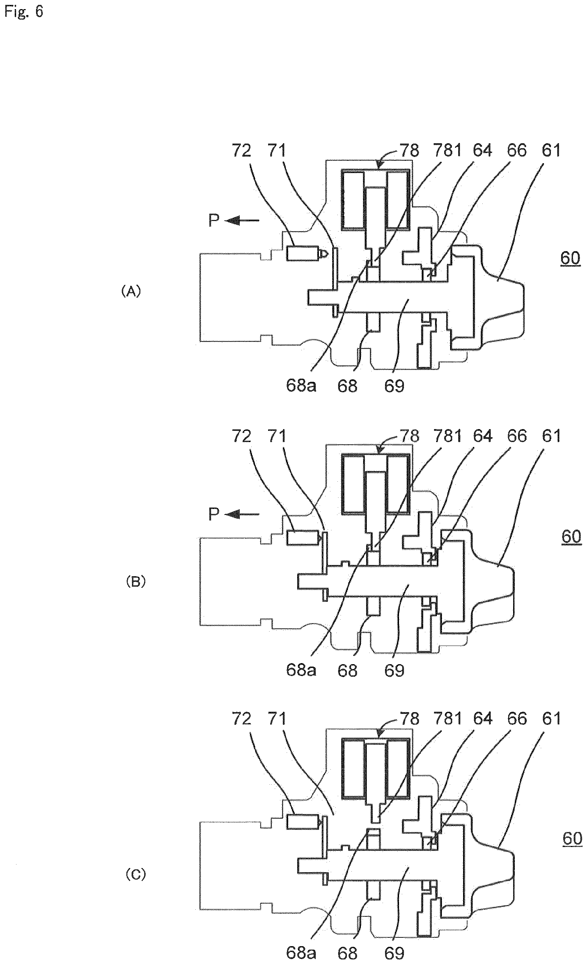

Figs. 6(A) to 6(C) are longitudinal cross-sectional views each schematically showing an extracted part of the operation unit 60 shown in Fig. 3. Each of Figs. 6(A) to 6(C) shows the contour of the operation unit 60 as a whole, the main operation part 61, the plate casing 64, the locking cam 66, the solenoid cam 68, the shaft 69, the pressing piece 71, the request switch 72, and the solenoid part 78.

Fig. 6(A) shows the main operation part 61 in the OFF state Q2. Fig. 6(B) shows the main operation part 61 in the authentication verifying state Q3. Fig. 6(C) shows the state after authentication is verified in the authentication verifying state Q3. In the schematic longitudinal cross-sectional views of Figs. 6(A) to 6(C), hatching is omitted.

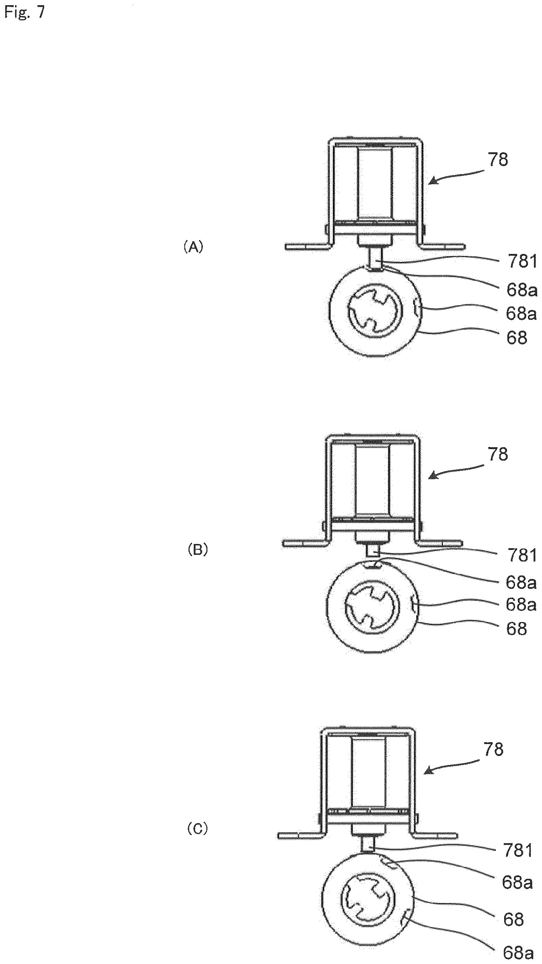

Figs. 7(A) to 7(C) are transverse cross-sectional views each showing the solenoid cam 68 and the solenoid part 78 as seen in the direction of extension of the shaft 69 shown in Fig. 6(A). Fig. 7(A) shows the OFF state Q2. Fig. 7(B) shows the authentication verifying state Q3. Fig. 7(C) shows the authentication verified state Q4.

As illustrated in Figs. 7(A) to 7(C), the solenoid cam 68 has grooves 68a at positions corresponding to the LOCK position and the OFF position of the main operation part 61 (see Fig. 2).

The states shown in Fig. 5 will be described with reference to Figs. 6 and 7.

### (OFF State Q2)

The OFF state Q2 is a state in which the power source of the power unit control unit 30 is off and no authentication is performed by the authentication control unit 50.

The OFF state Q2 is a state in which the main operation part 61 is in the OFF position shown in Fig. 2.

In the OFF state Q2, the solenoid part 78 is not conducting. That is, the latch portion 781 of the solenoid part 78 is received in the groove 68a of the solenoid cam 68, as shown in Figs. 6(A) and 7(A). This prevents the main operation part 61 from rotating even though a load is applied by a rotation operation.

### (Authentication Verifying State Q3)

The authentication verifying state Q3 is a state entered by transition from the OFF state Q2, the transition caused by displacement of the main operation part 61, the displacement caused in response to a load application operation (load operation) applied to the main operation part 61 in the OFF state Q2. More specifically, a pushing load application operation (pushing operation) in the pushing direction P is applied to the main operation part 61, so that the main operation part 61 is pushed.

When the pushing operation in the pushing direction P is applied to the main operation part 61 in the OFF state Q2 of Fig. 6(A), the main operation part 61 is pushed in the pushing direction P as shown in Fig. 6(B). The main operation part 61 is displaced. As a result of the main operation part 61 being pushed, the straddled-vehicle authentication system C transitions from the OFF state Q2 to the authentication verifying state Q3.

As shown in Fig. 6(B), the main operation part 61 being pushed causes the pressing piece 71, which is attached to the shaft 69 pushed together with the main operation part 61, to actuate the request switch 72.

The actuation of the request switch 72 allows the authentication control unit 50 to recognize the transition to the authentication verifying state Q3. In the authentication verifying state Q3, the authentication control unit 50 communicates with the portable device 40, to perform an authentication verifying operation about the use of the straddled vehicle 10. In more detail, the authentication control unit 50 wirelessly transmits a request signal to the portable device 40. The authentication control unit 50 checks a code represented by a response signal wirelessly transmitted from the portable device 40 in response to the request signal against a code associated with the straddled vehicle 10. Upon matching of the codes, the authentication is verified. In the authentication verifying state Q3, the power source of the power unit control unit 30 is off. To be more specific, the authentication verifying state Q3 is a state where the power source of the power unit control unit 30 is off and the authentication control unit 50 performs the authentication verifying operation.

If the authentication is verified, the authentication control unit 50 renders the solenoid part 78 conducting. When the solenoid part 78 is conducting, the latch portion 781 is withdrawn from the groove 68a of the solenoid cam 68.

Fig. 6(C) shows a state after the latch portion 781 is withdrawn from the groove 68a of the solenoid cam 68 in the authentication verifying state Q3. The state shown in Fig. 6(C) is a state after the authentication performed by the authentication control unit 50 is verified in the authentication verifying state Q3. In the state after the authentication is verified, the main operation part 61 is rotatable because the latch portion 781 is withdrawn from the groove 68a of the solenoid cam 68.

The main operation part 61 of this embodiment is configured such that, after the main operation part 61 is pushed and upon release of the load applied by the pushing operation, the main operation part 61 is moved back in the direction opposite to the pushing direction P due to a biasing force of the stopper part 63. That is, the main operation part 61 returns to the same position as it is in the OFF state Q2. Here, the release of the load applied by the pushing operation is distinguished from the "load application operation". Therefore, even though the main operation part 61 is moved back in the direction opposite to the pushing direction P upon release of the load applied by the operation, the authentication verifying state Q3 still continues as long as the solenoid part 78 is conducting. Thus, a state where the main operation part 61 has been moved back in the direction opposite to the pushing direction P upon release of the load is included in the authentication verifying state Q3.

After elapse of a predetermined time period since the authentication was verified, the authentication control unit 50 stops conducting the solenoid part 78. As a result, the state of the latch portion 781 transitions from the state where it is not in the groove 68a as shown in Fig. 6(C) to the state where it is in the groove 68a as shown in Fig. 6(A).

If the authentication is not verified in the authentication verifying state Q3, the authentication control unit 50 does not render the solenoid part 78 conducting. Thus, the state where the latch portion 781 is within the groove 68a of the solenoid cam 68 is maintained. As a result, the state of the straddled-vehicle authentication system C returns from the authentication verifying state Q3 to the OFF state Q2 shown in Fig. 6(A).

As mentioned above, even though the authentication is verified, the state of the straddled-vehicle authentication system C returns from the authentication verifying state Q3 to the OFF state Q2 shown in Fig. 6(A) if the predetermined time period has elapsed without any subsequent load application operation. At this time, the latch portion 781 having been withdrawn from the groove 68a of the solenoid cam 68 enters the groove 68a. Since the state returns to the OFF state Q2 upon elapse of the predetermined time period, occurrence of a situation in which the solenoid part 78 is kept conducting for a long time is suppressed.

If the authentication is verified in the authentication verifying state Q3, the latch portion 781 is withdrawn from the groove 68a of the solenoid cam 68. As a result, the main operation part 61 becomes displaceable. A load application operation applied to the main operation part 61 displaces the main operation part 61. This causes the straddled-vehicle authentication system C to transition to the authentication verified state Q4. By successfully completing an operation for displacing the main operation part 61, the rider can recognize that the authentication has been verified.

If the authentication is not verified in the authentication verifying state Q3, the main operation part is blocked against displacement. In this case, the rider cannot complete the operation for displacing the main operation part 61 even though the rider applies a load to the main operation part 61. The non-displacement of the main operation part 61 provides the rider with a feedback, which allows the rider to intuitively recognize that the verification of authentication has failed. This suppresses occurrence of a situation in which the rider who cannot recognize whether or not the authentication is successful repeats an authentication operation so that power consumption is increased.

### (Authentication Verified State Q4)

The authentication verified state Q4 is a state entered by a transition from the authentication verifying state Q3 upon verification of the authentication by the authentication control unit 50 in the authentication verifying state Q3. The transition is caused by a displacement of the main operation part 61. The displacement is caused in response to a load application operation (load operation) applied to the main operation part 61. More specifically, the authentication verified state Q4 is a state entered by a transition from the authentication verifying state Q3, and the transition is caused by a rotation of the main operation part 61 to the OPEN position. The rotation is caused in response to a load produced by a rotation operation oriented from the OFF position toward the OPEN position. The direction of the load that rotates the main operation part 61 shown in Fig. 2 from the OFF position to the OPEN position is clockwise in Fig. 2.

In the main operation part 61 shown in Fig. 2, the main operation part 61 is in the OPEN position. The state shown in Fig. 2 corresponds to the authentication verified state Q4.

In the authentication verified state Q4, the power source of the power unit control unit 30 is off and the authentication performed by the authentication control unit 50 has been verified. In the authentication verified state Q4, the open switch 77a (see Fig. 4) is actuated while the main switch 77b is not actuated. The actuation of the open switch 77a allows the authentication control unit 50 to recognize the transition to the authentication verified state Q4.

The main operation part 61 of this embodiment is rotated by the rotation operation, and thus switched to the OPEN position corresponding to the authentication verified state Q4. The rider is able to recognize the authentication status based on the rotation position of the main operation part 61. It is easy for the rider to visually recognize the switching to the authentication verified state Q4.

In the authentication verified state Q4, a function of the straddled vehicle 10 that requires the verification of authentication is available. In the authentication verified state Q4 of this embodiment, operations for opening the fuel lid 28 and the seat 23 are permitted. In the authentication verified state Q4, the sub operation parts 81, 82 are operable.

Figs. 8(A) and 8(B) illustrate transverse cross-sections of the operation unit 60 each showing the locking plate 65 and the locking cam 66. Figs. 8(A) and 8(B) show the locking plate 65 and the locking cam 66 as seen in the direction of extension of the shaft 69. Fig. 8(A) shows the authentication verifying state Q3. Fig. 8(B) shows the authentication verified state Q4. The state of the locking plate 65 and the locking cam 66 in the OFF state Q2 is the same as that in the authentication verifying state Q3 shown in Fig. 8(A).

The locking cam 66 is rotated along with rotation of the main operation part 61.

When the main operation part 61 is in the OFF position (see Fig. 2) corresponding to the OFF state Q2 or the authentication verifying state Q3, the locking cam 66 behaves so as to arrange the locking plate 65 in a position that blocks the sub operation parts 81, 82 against displacement, as shown in Fig. 8(A). In this case, the sub operation parts 81, 82 are blocked against displacement caused in response to a load application operation. Therefore, even when a pushing load is applied to the sub operation parts 81, 82, the sub operation parts 81, 82 are not displaced. Thus, unlocking the lid lock 28a and the seat lock 23a is not permitted.

The main operation part 61 is configured such that displacement of the main operation part 61 from the OFF position to the OPEN position (see Fig. 2) shown in Fig. 8(B) causes the locking plate 65 to be withdrawn from the position that blocks the sub operation parts 81, 82 against displacement. In more detail, rotation of the main operation part 61 to the OPEN position shown in Fig. 8(B) causes a rotation of the locking cam 66. The locking plate 65 is biased by a biasing member (not shown) such as a spring in the direction oriented from the sub operation parts 81, 82 toward the locking cam 66. As a result of the rotation of the locking cam 66, the cam groove 66a which is formed in the circumference of the locking cam 66 confronts the locking plate 65. The locking plate 65 enters the cam groove 66a due to a biasing force of the biasing member. The locking plate 65 is accordingly withdrawn from the block position. This is how displacement of the sub operation parts 81, 82 by the load application operation is permitted. In sum, when a pushing load is applied to the sub operation parts 81, 82, the sub operation parts 81, 82 are pushed in. Displacements of the sub operation parts 81, 82 are transmitted to the lid lock 28a and the seat lock 23a, respectively, via wires (not shown). The lid lock 28a and the seat lock 23a are unlocked.

The authentication verified state Q4 is a state that permits the fuel lid 28 and the seat 23 to be opened, and also is a state that disables traveling of the straddled vehicle 10. In the state that disables traveling of the straddled vehicle 10, a device for operating the power unit 22 can be deactivated. For example, a fuel pump that supplies a fuel to the engine 221 can be deactivated. Accordingly, the straddled-vehicle authentication system C of this embodiment is able to permit the fuel lid 28 and the seat 23 to be opened while reducing power consumption associated with the operation of the power unit 22. The reduction in the power consumption reduces the need to increase the size of the battery, and therefore the need to increase the size of the straddled vehicle.

In the authentication verified state Q4, the main operation part 61 is displaceable by receiving a load in the direction reverse to the direction of the load that causes the state of the straddled-vehicle authentication system C to transition from the authentication verifying state Q3 to the authentication verified state Q4. This load in the reverse direction will be referred to as a reverse load. The reverse load is a load applied in the counterclockwise direction to the main operation part 61 shown in Fig. 2.

The reverse load application operation being applied to the main operation part 61 in the authentication verified state Q4 causes the main operation part 61 to be displaced so that the state of the straddled-vehicle authentication system C transitions from the authentication verified state Q4 to the OFF state Q2. More specifically, as a result of the reverse load oriented from the OPEN position (see Fig. 2) toward the OFF position being applied to the main operation part 61 in the authentication verified state Q4, the main operation part 61 is rotated to the OFF position. The rotation of the main operation part 61 to the OFF position causes the state of the straddled-vehicle authentication system C to return to the OFF state Q2.

### (Power-unit ON State Q5)

The power-unit ON state Q5 is a state entered by transition from the authentication verified state Q4. The transition is caused by a displacement of the main operation part 61. The displacement is caused in response to a load application operation applied to the main operation part 61 in the authentication verified state Q4. More specifically, by receiving the load produced by the rotation operation, the main operation part 61 is rotated from the OPEN position to the ON position. The rotation of the main operation part 61 to the ON position causes the state of the straddled-vehicle authentication system C to transition from the authentication verified state Q4 to the power-unit ON state Q5.

In the power-unit ON state Q5, the sub operation parts 81, 82 are blocked against displacement.

The rotation of the main operation part 61 to the ON position causes the main switch 77b (see Fig. 4) to be actuated. This allows the authentication control unit 50 to recognize the transition to the power-unit ON state Q5. As a result of the actuation of the main switch 77b, the power source of the power unit control unit 30 is turned on.

In the power-unit ON state Q5, the power source of the power unit control unit 30 is on, and the authentication performed by the authentication control unit 50 has been verified. In this embodiment, in principle, re-authentication is performed in the power-unit ON state Q5. The re-authentication includes an authentication performed between the authentication control unit 50 and the portable device 40, and a further authentication performed between the authentication control unit 50 and the power unit control unit 30. The authentication performed between the authentication control unit 50 and the portable device 40 is as described above, and therefore a description thereof is omitted here. The further authentication performed between the authentication control unit 50 and the power unit control unit 30 is for determining whether or not to make the power unit 22 operable. In this further authentication, a data check is performed between the power unit control unit 30 and the authentication control unit 50. In more detail, the authentication control unit 50 transmits a code to be checked to the power unit control unit 30. If the code transmitted from the authentication control unit 50 matches a code that is pre-stored in the power unit control unit 30, the authentication between the authentication control unit 50 and the power unit control unit 30 is verified. After verification of the re-authentication by the authentication control unit 50 and the power unit control unit 30, the power unit control unit 30 makes the power unit 22 operable. If the re-authentication is not verified, operations of the power unit 22 are inhibited.

Since the authentication between the power unit control unit 30 and the authentication control unit 50 as well as the authentication between the authentication control unit 50 and the portable device 40 is performed, improved security is obtained.

In response to the actuation of the start switch 26 (see Fig. 1) after the re-authentication between the authentication control unit 50 and the power unit control unit 30 is verified in the power-unit ON state Q5, the state of the straddled-vehicle authentication system C transitions to the engine operable state Q6. In the engine operable state Q6, the power unit control unit 30 is able to start the power unit 22. In the engine operable state Q6, the straddled vehicle is able to travel.

A reverse load application operation being applied to the main operation part 61 in the power-unit ON state Q5 or in the engine operable state Q6 causes the main operation part 61 to be displaced so that the state of the straddled-vehicle authentication system C transitions to the authentication verified state Q4. The reverse load application operation being applied to the main operation part 61 in the power-unit ON state Q5 or in the engine operable state Q6 causes the main operation part 61 to be displaced to the OPEN position. The displacement of the main operation part 61 to the OPEN position causes the state of the straddled-vehicle authentication system C to return to the authentication verified state Q4.

The straddled-vehicle authentication system C of this embodiment is configured such that the following is permitted without re-authentication until a predetermined retention time elapses since the state of the straddled-vehicle authentication system C transitioned from the power-unit ON state Q5 to the authentication verified state Q4. That is, the state of the straddled-vehicle authentication system C is permitted to return to the power-unit ON state Q5. In addition, the power unit control unit 30 is permitted to make the power unit 22 operable.

When return of the state of the straddled-vehicle authentication system C to the power-unit ON state Q5 occurs within a time period after the state of the straddled-vehicle authentication system C transitions from the power-unit ON state Q5 to the authentication verified state Q4 and before the retention time elapses; no re-authentication is performed, and the power unit control unit 30 makes the power unit 22 operable. More specifically, the authentication control unit 50 recognizes that the state of the straddled-vehicle authentication system C has transitioned from the power-unit ON state Q5 to the authentication verified state Q4, based on signals supplied from the open switch 77a and the main switch 77b. Upon recognition of transition to the authentication verified state Q4, the authentication control unit 50 starts a time measurement. Upon recognition that the state of the straddled-vehicle authentication system C transitions to the power-unit ON state Q5 within the retention time, the authentication control unit 50 omits the re-authentication.

For example, even when the rider, who lost the portable device and when the straddled-vehicle authentication system C is in the state Q5 or Q6, applies an operation so as to bring the straddled-vehicle authentication system C once into the authentication verified state Q4 from the state Q5 or Q6, the power unit 22 is operable as long as the state of the straddled-vehicle authentication system C transitions to the power-unit ON state Q5 from the state Q4 within the retention time.

An additional condition may be provided for omission of the re-authentication. The additional condition is that the authentication which is performed when the state of the straddled-vehicle authentication system C is transitioning from the power-unit ON state Q5 to the authentication verified state Q4 has been failed. In such a case, the authentication is performed when the state of the straddled-vehicle authentication system C is transitioning to the authentication verified state Q4, and if the authentication is verified, the authentication control unit 50 performs re-authentication even though return of the state of the straddled-vehicle authentication system C to the power-unit ON state Q5 occurs within the retention time.

### (Handlebar Locked State Q1)

The handlebar locked state Q1 is a state entered by transition from the OFF state Q2. The transition is caused by a displacement of the main operation part 61. The displacement is caused in response to a load application operation applied to the main operation part 61 in the OFF state Q2. More specifically, the handlebar locked state Q1 is a state entered by transition from the OFF state Q2. The transition is caused by a rotation of the main operation part 61 to the LOCK position. The rotation is caused in response to a pushing load and a reverse load oriented from the OFF position (see Fig. 2) toward the LOCK position.

As a result of the rotation of the main operation part 61 to the LOCK position, the locking crank 73 which is configured to rotate together with the main operation part 61 and the shaft 69 causes the handlebar locking pin 76 to protrude out of the cylinder body 75. The handlebar locking pin 76 thus protruding blocks the handlebars 17 against rotation.

A load application operation being applied to the main operation part 61 in the handlebar locked state Q1 causes the main operation part 61 to be displaced so that the state of the straddled-vehicle authentication system C transitions from the handlebar locked state Q1 to the OFF state Q2. In more detail, the main operation part 61 in the handlebar locked state Q1 receives a pushing load and a load oriented from the LOCK position toward the OFF position, to be rotated to the OFF position, so that the state transitions to the OFF state Q2.

The state transition between the handlebar locked state Q1 and the OFF state Q2 causes the authentication using the portable device 40.

In this embodiment, the state of the straddled-vehicle authentication system C is switched from the OFF state Q2 through the authentication verifying state Q3 and the authentication verified state Q4 to the power-unit ON state Q5. The authentication verified state Q4 is provided between the authentication verifying state Q3 and the power-unit ON state Q5.

The authentication verified state Q4 is a state entered by transition from the authentication verifying state Q3. The transition is caused by a displacement of the main operation part 61. The displacement is caused in response to an operation applied to the main operation part 61 in the state where the authentication performed by the authentication control unit 50 has been verified. In this configuration, it is possible to maintain the authentication verified state Q4 by operating the main operation part 61 so as to bring the straddled-vehicle authentication system C into the authentication verified state Q4 and not applying any more operation.

In the authentication verified state Q4, the power source of the power unit control unit 30 is off, and no control is performed on the power unit 22. In the authentication verified state Q4, an operation for unlocking the lid lock 28a or the seat lock 23a is permitted. The operation for unlocking the lid lock 28a or the seat lock 23a is permitted on the condition that the authentication performed by the authentication control unit 50 is verified.

The authentication performed by the authentication control unit 50 by using the portable device 40 provides a high degree of security due to the complexity and the high confidentiality of the authentication information. Accordingly, an enhanced security is achieved in association with the release of the lid lock 28a or the seat lock 23a of the straddled vehicle 10 whose main operation part 61 is exposed to the outside.

In the power-unit ON state Q5, the power source of the power unit control unit 30 is on, and the power unit control unit 30 controls the power unit 22. In the authentication verified state Q4, on the other hand, the power source of the power unit control unit is off, and therefore power consumption is reduced as compared with the power-unit ON state Q5. Since the authentication verified state Q4 is a state after the authentication performed by the authentication control unit 50 is verified, power consumption is reduced as compared with the authentication verifying state Q3 in which the authentication control unit 50 performs the authentication verifying operation. A transition to the authentication verified state Q4 is caused by a displacement of the main operation part 61. The displacement is caused in response to an operation applied to the main operation part 61 in the state where the solenoid part 78 of the operation unit 60 is rendered conducting as a result of the verification of the authentication. In the authentication verified state Q4, therefore, the conduction of the solenoid part 78 can be stopped. Accordingly, the authentication verified state Q4 has less power consumption than the authentication verifying state Q3 does.

The straddled-vehicle authentication system of this embodiment consumes less power when releasing the lid lock 28a or the seat lock 23a is permitted. When releasing the lid lock 28a or the seat lock 23a is permitted, the engine 221 is stopped and therefore the straddled-vehicle authentication system C uses power of the battery 27.

The straddled-vehicle authentication system C of this embodiment, which consumes less power from the battery 27, can suppress an increase in the size of the battery 27. The straddled vehicle 10 is able to perform authentication with a high degree of security by using the portable device 40, with suppression of an increase in the size of the straddled vehicle 10, which may otherwise result from an increase in the size of the battery 27.

In the straddled-vehicle authentication system C of this embodiment, the displacement of the sub operation parts 81, 82 (see Fig. 8) for releasing the lid lock 28a or the seat lock 23a is controlled by the position of the locking plate 65 which depends on the rotation of the main operation part 61. There is no need for any dedicated actuator for blocking the sub operation parts 81, 82 against displacement.

The straddled-vehicle authentication system C of this embodiment achieves a further suppression of an increase in power consumption while controlling blocking of the sub operation parts 81, 82 against displacement and release of the blocking by means of an authentication performed via a communication with the portable device 40. Accordingly, an increase in the size of the straddled vehicle 10, which may result from an increase in the size of the battery 27, can be further suppressed.

In the above-described embodiment, the main operation part 61 provided with the rotation mechanism is illustrated as an example of the main operation part. The main operation part of the present invention is not limited thereto but may be, for example, a push button. In this case, it is conceivable that the state of the straddled-vehicle authentication system transitions each time the main operation part configured as a push button is displaced in response to a pushing operation.

In the above-described embodiment, the straddled-vehicle authentication system C in which the authentication verifying state Q3 and the authentication verified state Q4 are provided between the OFF state Q2 and the power-unit ON state Q5 is illustrated as an example of the straddled-vehicle authentication system. The straddled-vehicle authentication system of the present invention is not limited thereto but may be, for example, configured such that a state different from the authentication verifying state and the authentication verified state is provided between the OFF state and the power-unit ON state.

The above-described embodiment illustrates, as an example of the state of the straddled-vehicle authentication system, a situation in which the main operation part 61 is rotated from the OPEN position to the ON position by a rotation operation so that the state transitions from the authentication verified state Q4 to the power-unit ON state Q5 occurs. The straddled-vehicle authentication system of the present invention is not limited thereto. For example, the main operation part 61 may be rotated from the OPEN position to the ON position by a pushing operation as well as a rotation operation. In this configuration, if the main operation part 61 in the OPEN position is pushed, authentication is performed, and then if the authentication is verified, the main operation part 61 becomes rotatable. If the authentication is not verified, the pushing operation and the rotation operation applied to the main operation part 61 in the OPEN position cannot be completed.

In the above-described embodiment, the solenoid part 78 is illustrated as an example of the block portion configured to block the main operation part 61 from being displaced. The block portion of the present invention is not limited to a solenoid but may be, for example, an actuator such as a motor.

In the above-described embodiment, the power unit control unit 30 and the authentication control unit 50 configured to execute the programs stored in the storage device are illustrated as examples of the power unit control unit and the authentication control unit. Alternatively, at least one of the power unit control unit and the authentication control unit of the present invention may be implemented as hardware logic. It may be acceptable that the power unit control unit 30 and the authentication control unit 50 are included in the same arithmetic unit and the same storage device. No particular limitation is put on hardware configurations of the power unit control unit 30 and the authentication control unit 50.

In the above-described embodiment, the straddled-vehicle authentication system including the sub operation parts 81, 82 configured to unlock the lid lock 28a and the seat lock 23a is illustrated as an example of the straddled-vehicle authentication system. Alternatively, the sub operation part of the present invention may be configured to open an open/close part different from the fuel lid and the seat. It is not always necessary that the straddled-vehicle authentication system includes the sub operation part configured to open an open/close part. For example, the authentication verified state may be configured as a state in which power is supplied to an auxiliary machine.

In the above-described embodiment, the motorcycle is illustrated as an example of the straddled vehicle equipped with the straddled-vehicle authentication system. The straddled vehicle, however, is not limited to motorcycles but may be, for example, a vehicle having three or more wheels. The straddled vehicle may be an ATV (All-Terrain Vehicle) or the like.

In the above-described embodiment, the power unit 22 including the engine 221 is illustrated as the power unit configured to drive the straddled vehicle. The power unit, however, is not limited to the one including the engine 221. For example, a power unit including an electric motor is also adoptable.

The re-authentication consists of: (i) the authentication performed between the authentication control unit 50 and the portable device 40; and (ii) the authentication performed between the authentication control unit 50 and the power unit control unit 30. In this embodiment, the authentications (i) and (ii) are performed in the power-unit ON state Q5. The re-authentication, however, is not limited to this example. It may be acceptable to perform the authentication (i) when the state of the straddled-vehicle authentication system C is transitioning from the authentication verified state Q4 to the power-unit ON state Q5, while performing the authentication (ii) in the power-unit ON state Q5. Alternatively, it may be also acceptable to perform the authentication (i) in the power-unit ON state Q5 while performing the authentication (ii) when the state of the straddled-vehicle authentication system C is transitioning from the authentication verified state Q4 to the power-unit ON state Q5. Alternatively, it may be also acceptable to perform the authentications (i) and (ii) when the state of the straddled-vehicle authentication system C is transitioning from the authentication verified state Q4 to the power-unit ON state Q5. Performing the re-authentication is not indispensable.

### [DESCRIPTION OF THE REFERENCE SIGNS]

- 10: straddled vehicle
- 22: power unit
- 23: seat
- 23a: seat lock
- 28: fuel lid
- 28a: lid lock
- 30: power unit control unit
- 40: portable device
- 50: authentication control unit
- 61: main operation part
- 65: locking plate
- 66: locking cam
- 68: solenoid cam
- 78: solenoid part
- 81, 82: sub operation part
- C: straddled-vehicle authentication system
- Q2: OFF state
- Q3: authentication verifying state
- Q4: authentication verified state
- Q5: power-unit ON state

## Claims

1. A straddled-vehicle authentication system (C) for a straddled vehicle (10), the straddled-vehicle authentication system (C) comprising:
a power unit control unit (30) configured to control a power unit (22), the power unit control unit (30) provided in the straddled vehicle (10), the power unit (22) provided in the straddled vehicle (10) and configured to drive the straddled vehicle (10);
a portable device (40) configured to be used for an authentication to use the straddled vehicle (10) via a wireless communication, the portable device (40) being physically separate from the straddled vehicle (10);
an authentication control unit (50) configured to perform the authentication to use the straddled vehicle (10) by communicating with the portable device (40), the authentication control unit (50) provided in the straddled vehicle (10); and
a main operation part (61) configured to receive an operation for switching states (Q2, Q3, Q4, Q5) of the power unit control unit (30) and the authentication control unit (50), the main operation part (61) provided in the straddled vehicle (10) so as to be at least partially exposed to the outside of the straddled vehicle (10),
the straddled-vehicle authentication system (C) being configured such that the state of the straddled-vehicle authentication system (C) is switchable from a handlebar locked state (Q1) to an OFF state (Q2), and from the OFF state (Q2), through at least an authentication verifying state (Q3) and an authentication verified state (Q4), to a power-unit ON state (Q5), wherein
the OFF state (Q2) is a state entered by a transition from the handlebar locked state (Q1), the transition caused by a displacement of the main operation part (61), the displacement caused in response to a load generated by an operation applied to the main operation part (61) in the handlebar locked state (Q1), the OFF state (Q2) being a state in which a power source of the power unit control unit (30) is off and no authentication is performed by the authentication control unit (50),
the authentication verifying state (Q3) is a state entered by a transition from the OFF state (Q2), the transition caused by a displacement of the main operation part (61), the displacement caused in response to a load generated by an operation applied to the main operation part (61) in the OFF state (Q2), the authentication verifying state (Q3) causing the authentication control unit (50) to perform an authentication verifying operation,
the authentication verified state (Q4) is a state entered by a transition from the authentication verifying state (Q3), the transition caused by a displacement of the main operation part (61), the displacement caused in response to a load applied to the main operation part (61) in a state where authentication performed by the authentication control unit (50) has been verified in the authentication verifying state (Q3), the authentication verified state (Q4) being a state in which the power source of the power unit control unit (30) is off and the authentication performed by the authentication control unit (50) has been verified, and
the power-unit ON state (Q5) is a state entered by a transition from the authentication verified state (Q4), the transition caused by a displacement of the main operation part (61), the displacement caused in response to a load applied to the main operation part (61) in the authentication verified state (Q4), the power-unit ON state (Q5) being a state in which the power source of the power unit control unit (30) is on and the authentication performed by the authentication control unit (50) has been verified.

2. The straddled-vehicle authentication system (C) according to claim 1, wherein
the authentication verified state (Q4) is a state in which traveling of the straddled vehicle (10) is disabled.

3. The straddled-vehicle authentication system (C) according to claim 1 or 2, wherein
the main operation part (61) includes a rotation mechanism configured to be rotated by receiving a rotation operation,
a rotation of the main operation part (61) causes the state of the straddled-vehicle authentication system (C) to be switched from the authentication verifying state (Q3) to the authentication verified state (Q4), the rotation caused in response to a rotation operation applied to the main operation part (61) in the state where the authentication performed by the authentication control unit (50) has been verified in the authentication verifying state (Q3).

4. The straddled-vehicle authentication system (C) according to any one of claims 1 to 3, wherein
the main operation part (61) includes a main displacement block portion (78, 781) configured to block the main operation part (61) from being displaced by a load applied to the main operation part (61) in order to transition the state of the straddled-vehicle authentication system (C) from the authentication verifying state (Q3) to the authentication verified state (Q4), the blocking being effected depending on a result of the authentication performed by the authentication control unit (50),
upon verification of the authentication performed by the authentication control unit (50), the main displacement block portion (78, 781) is configured to release the blocking of the main operation part (61) against a displacement.

5. The straddled-vehicle authentication system (C) according to any one of claims 1 to 4, wherein
the straddled-vehicle authentication system (C) is configured to perform a re-authentication within a time period when the straddled-vehicle authentication system (C) is in the power-unit ON state (Q5) after the state of the straddled-vehicle authentication system (C) transitions from the authentication verified state (Q4) to the power-unit ON state (Q5), the re-authentication comprising the authentication performed between the authentication control unit (50) and the portable device (40) and a further authentication performed between the authentication control unit (50) and the power unit control unit (30),
the power unit control unit (30) is configured to allow operation of the power unit (22) upon verification of the re-authentication,
the straddled-vehicle authentication system (C) is configured to, until elapse of a predetermined time since the state of the straddled-vehicle authentication system (C) transitioned from the power-unit ON state (Q5) to the authentication verified state (Q4), permit the state of the straddled-vehicle authentication system (C) to return to the power-unit ON state (Q5) and permit the power unit control unit (30) to allow operation of the power unit (22) without the re-authentication.

6. The straddled-vehicle authentication system (C) according to any one of claims 1 to 5, comprising a sub operation part (81, 82) arranged adjacent to the main operation part (61), the sub operation part (81, 82) configured to open an open/close part (23a, 28a) provided in the straddled vehicle (10) and being displaceable by a load applied thereto, wherein
the main operation part (61) includes a sub block portion (65, 66) arranged in a position to block the sub operation part (81, 82) against a displacement when the main operation part (61) is in a position corresponding to the authentication verifying state (Q3) or the OFF state (Q2),
the main operation part (61) is configured such that a displacement of the main operation part (61) from the position corresponding to the authentication verifying state (Q3) to a position corresponding to the authentication verified state (Q4) causes the sub block portion (65, 66) to be withdrawn from the position that blocks the sub operation part (81, 82) against a displacement.

7. A straddled vehicle (10) comprising:
the straddled-vehicle authentication system (C) according to any one of claims 1 to 6; and
a power unit (22) that drives the straddled vehicle (10).

## Patentansprüche

1. Ein Grätsch-Fahrzeug-Authentifizierungssystem (C) für ein Grätsch-Fahrzeug (10), wobei das Grätsch-Fahrzeug-Authentifizierungssystem (C) folgende Merkmale aufweist:
eine Antriebseinheit-Steuereinheit (30), die ausgebildet ist, um eine Antriebseinheit (22) zu steuern, wobei die Antriebseinheit-Steuereinheit (30) in dem Grätsch-Fahrzeug (10) vorgesehen ist, wobei die Antriebseinheit (22) in dem Grätsch-Fahrzeug (10) vorgesehen und ausgebildet ist, um das Grätsch-Fahrzeug (10) anzutreiben;
eine tragbare Vorrichtung (40), die ausgebildet ist, um für eine Authentifizierung zur Verwendung des Grätsch-Fahrzeugs (10) über eine Drahtloskommunikation verwendet zu werden, wobei die tragbare Vorrichtung (40) physisch von dem Grätsch-Fahrzeug (10) getrennt ist;
eine Authentifizierungssteuereinheit (50), die ausgebildet ist, um die Authentifizierung zur Verwendung des Grätsch-Fahrzeugs (10) durch Kommunizieren mit der tragbaren Vorrichtung (40) durchzuführen, wobei die Authentifizierungssteuereinheit (50) in dem Grätsch-Fahrzeug (10) vorgesehen ist; und
ein Hauptbetriebsteil (61), das ausgebildet ist, um einen Vorgang zum Schalten von Zuständen (Q2, Q3, Q4, Q5) der Antriebseinheit-Steuereinheit (30) und der Authentifizierungssteuereinheit (50) zu empfangen, wobei das Hauptbetriebsteil (61) in dem Grätsch-Fahrzeug (10) vorgesehen ist und dabei gegenüber der Außenseite des Grätsch-Fahrzeugs (10) zumindest teilweise freiliegt,
wobei das Grätsch-Fahrzeug-Authentifizierungssystem (C) derart ausgebildet ist, dass der Zustand des Grätsch-Fahrzeug-Authentifizierungssystems (C) aus einem Lenker-Verriegelt-Zustand (Q1) in einen AUS-Zustand (Q2) und aus dem AUS-Zustand (Q2) durch zumindest einen Authentifizierungsverifizierungszustand (Q3) und einen Authentifizierung-Verifiziert-Zustand(Q4) in einen Antriebseinheit-AN-Zustand (Q5) schaltbar ist, wobei:
der AUS-Zustand (Q2) ein Zustand ist, in den durch einen Übergang aus dem Lenker-Verriegelt-Zustand (Q1) eingetreten wird, wobei der Übergang durch eine Verschiebung des Hauptbetriebsteils (61) bewirkt wird, wobei die Verschiebung ansprechend auf eine Last bewirkt wird, die durch einen Vorgang erzeugt wird, der in dem Lenker-Verriegelt-Zustand (Q1) auf das Hauptbetriebsteil (61) angewendet wird, wobei der AUS-Zustand (Q2) ein Zustand ist, in dem eine Leistungsquelle der Antriebseinheit-Steuereinheit (30) aus ist und keine Authentifizierung durch die Authentifizierungssteuereinheit (50) durchgeführt wird,
der Authentifizierungsverifizierungszustand (Q3) ein Zustand ist, in den durch einen Übergang aus dem AUS-Zustand (Q2) eingetreten wird, wobei der Übergang durch eine Verschiebung des Hauptbetriebsteils (61) bewirkt wird, wobei die Verschiebung ansprechend auf eine Last bewirkt wird, die durch einen Vorgang erzeugt wird, der in dem AUS-Zustand (Q2) auf das Hauptbetriebsteil (61) angewendet wird, wobei der Authentifizierungsverifizierungszustand (Q3) bewirkt, dass die Authentifizierungssteuereinheit (50) einen Authentifizierungsverifizierungsvorgang (Q3) durchführt,
der Authentifizierung-Verifiziert-Zustand (Q4) ein Zustand ist, in den durch einen Übergang aus dem Authentifizierungsverifizierungszustand (Q3) eingetreten wird, wobei der Übergang durch eine Verschiebung des Hauptbetriebsteils (61) bewirkt wird, wobei die Verschiebung ansprechend auf eine Last bewirkt wird, die in einem Zustand auf das Hauptbetriebsteil (61) angewendet wird, in dem eine Authentifizierung, die durch die Authentifizierungssteuereinheit (50) durchgeführt wird, in dem Authentifizierungsverifizierungszustand (Q3) verifiziert wurde, wobei der Authentifizierung-Verifiziert-Zustand (Q4) ein Zustand ist, in dem die Leistungsquelle der Antriebseinheit-Steuereinheit (30) aus ist und die Authentifizierung, die durch die Authentifizierungssteuereinheit (50) durchgeführt wird, verifiziert wurde, und
der Antriebseinheit-AN-Zustand (Q5) ein Zustand ist, in den durch einen Übergang aus dem Authentifizierung-Verifiziert-Zustand (Q4) eingetreten wird, wobei der Übergang durch eine Verschiebung des Hauptbetriebsteils (61) bewirkt wird, wobei die Verschiebung ansprechend auf eine Last bewirkt wird, die in dem Authentifizierung-Verifiziert-Zustand (Q4) auf das Hauptbetriebsteil (61) angewendet wird, wobei der Antriebseinheit-AN-Zustand (Q5) ein Zustand ist, in dem die Leistungsquelle der Antriebseinheit-Steuereinheit (30) an ist und die Authentifizierung, die durch die Authentifizierungssteuereinheit (50) durchgeführt wird, verifiziert wurde.

2. Das Grätsch-Fahrzeug-Authentifizierungssystem (C) gemäß Anspruch 1, bei dem:
der Authentifizierung-Verifiziert-Zustand (Q4) ein Zustand ist, in dem ein Bewegen des Grätsch-Fahrzeugs (10) gesperrt ist.

3. Das Grätsch-Fahrzeug-Authentifizierungssystem (C) gemäß Anspruch 1 oder 2, bei dem:
das Hauptbetriebsteil (61) einen Rotationsmechanismus aufweist, der ausgebildet ist, um durch Aufnehmen eines Drehvorgangs gedreht zu werden,
eine Drehung des Hauptbetriebsteils (61) bewirkt, dass der Zustand des Grätsch-Fahrzeug-Authentifizierungssystems (C) aus dem Authentifizierungsverifizierungszustand (Q3) in den Authentifizierung-Verifiziert-Zustand (Q4) geschaltet wird, wobei die Drehung ansprechend auf einen Drehvorgang bewirkt wird, der in dem Zustand auf das Hauptbetriebsteil (61) angewendet wird, in dem die Authentifizierung, die durch die Authentifizierungssteuereinheit (50) durchgeführt wird, in dem Authentifizierungsverifizierungszustand (Q3) verifiziert wurde.

4. Das Grätsch-Fahrzeug-Authentifizierungssystem (C) gemäß einem der Ansprüche 1 bis 3, bei dem:
das Hauptbetriebsteil (61) einen Hauptverschiebungsblockierabschnitt (78, 781) aufweist, der ausgebildet ist, um zu blockieren, dass das Hauptbetriebsteil (61) durch eine Last, die auf das Hauptbetriebsteil (61) angewendet wird, verschoben wird, um den Zustand des Grätsch-Fahrzeug-Authentifizierungssystems (C) aus dem Authentifizierungsverifizierungszustand (Q3) in den Authentifizierung-Verifiziert-Zustand (Q4) übergehen zu lassen, wobei das Blockieren in Abhängigkeit von einem Ergebnis der Authentifizierung ausgeführt wird, die durch die Authentifizierungssteuereinheit (50) durchgeführt wird,
auf eine Verifizierung der Authentifizierung hin, die durch die Authentifizierungssteuereinheit (50) durchgeführt wird, der Hauptverschiebungsblockierabschnitt (78, 781) ausgebildet ist, um das Blockieren des Hauptbetriebsteils (61) gegen eine Verschiebung zu lösen.

5. Das Grätsch-Fahrzeug-Authentifizierungssystem (C) gemäß einem der Ansprüche 1 bis 4, wobei:
das Grätsch-Fahrzeug-Authentifizierungssystem (C) ausgebildet ist, um eine Neuauthentifizierung innerhalb einer Zeitperiode durchzuführen, wenn das Grätsch-Fahrzeug-Authentifizierungssystem (C) in dem Antriebseinheit-AN-Zustand (Q5) ist, nachdem der Zustand des Grätsch-Fahrzeug-Authentifizierungssystems (C) aus dem Authentifizierung-Verifiziert-Zustand (Q4) in den Antriebseinheit-AN-Zustand (Q5) übergeht, wobei die Neuauthentifizierung die Authentifizierung, die zwischen der Authentifizierungssteuereinheit (50) und der tragbaren Vorrichtung (40) durchgeführt wird, und eine weitere Authentifizierung aufweist, die zwischen der Authentifizierungssteuereinheit (50) und der Antriebseinheit-Steuereinheit (30) durchgeführt wird,
die Antriebseinheit-Steuereinheit (30) ausgebildet ist, um auf eine Verifizierung der Neuauthentifizierung hin einen Betrieb der Antriebseinheit (22) zu ermöglichen,
das Grätsch-Fahrzeug-Authentifizierungssystem (C) ausgebildet ist, um bis zum Verstreichen einer vorbestimmten Zeit, seit der Zustand des Grätsch-Fahrzeug-Authentifizierungssystems (C) aus dem Antriebseinheit-AN-Zustand (Q5) in den Authentifizierung-Verifiziert-Zustand (Q4) übergegangen ist, zu erlauben, dass der Zustand des Grätsch-Fahrzeug-Authentifizierungssystems (C) in den Antriebseinheit-AN-Zustand (Q5) zurückkehrt, und zu erlauben, dass die Antriebseinheit-Steuereinheit (30) einen Betrieb der Antriebseinheit (22) ohne die Neuauthentifizierung ermöglicht.

6. Das Grätsch-Fahrzeug-Authentifizierungssystem (C) gemäß einem der Ansprüche 1 bis 5, das ein Teil-Betriebsteil (81, 82) aufweist, das benachbart zu dem Hauptbetriebsteil (61) angeordnet ist, wobei das Teil-Betriebsteil (81, 82) ausgebildet ist, um ein Öffnen/Schließen-Teil (23a, 28a), das in dem Grätsch-Fahrzeug (10) vorgesehen ist und durch eine auf dasselbe angewendete Last verschiebbar ist, zu öffnen, wobei:
das Hauptbetriebsteil (61) einen Teil-Blockierabschnitt (65, 66) aufweist, der in einer Position angeordnet ist, um das Teil-Betriebsteil (81, 82) gegen eine Verschiebung zu blockieren, wenn das Hauptbetriebsteil (61) sich in einer Position befindet, die dem Authentifizierungsverifizierungszustand (Q3) oder dem AUS-Zustand (Q2) entspricht,
das Hauptbetriebsteil (61) derart ausgebildet ist, dass eine Verschiebung des Hauptbetriebsteils (61) aus der Position, die dem Authentifizierungsverifizierungszustand (Q3) entspricht, in eine Position, die dem Authentifizierung-Verifiziert-Zustand (Q4) entspricht, bewirkt, dass der Teil-Blockierabschnitt (65, 66) aus der Position zurückgezogen wird, die das Teil-Betriebsteil (81, 82) gegen eine Verschiebung blockiert.

7. Ein Grätsch-Fahrzeug (10), das folgende Merkmale aufweist:
das Grätsch-Fahrzeug-Authentifizierungssystem (C) gemäß einem der Ansprüche 1 bis 6; und
eine Antriebseinheit (22), die das Grätsch-Fahrzeug (10) antreibt.

## Revendications

1. Système d'authentification de véhicule à selle (C) pour un véhicule à selle (10), le système d'authentification de véhicule à selle (C) comprenant:
une unité de commande d'unité de propulsion (30) configurée pour commander une unité de propulsion (22), l'unité de commande d'unité de propulsion (30) étant prévue dans le véhicule à selle (10), l'unité de propulsion (22) prévue dans le véhicule à selle (10) et étant configurée pour entraîner le véhicule à selle (10);
un dispositif portable (40) configuré pour être utilisé pour une authentification pour utiliser le véhicule à selle (10) par l'intermédiaire d'une communication sans fil, le dispositif portable (40) étant physiquement séparé du véhicule à selle (10);
une unité de commande d'authentification (50) configurée pour effectuer l'authentification pour utiliser le véhicule à selle (10) en communiquant avec le dispositif portable (40), l'unité de commande d'authentification (50) étant prévue dans le véhicule à selle (10); et
une partie d'actionnement principale (61) configurée pour recevoir un actionnement pour commuter les états (Q2, Q3, Q4, Q5) de l'unité de commande d'unité de propulsion (30) et l'unité de commande d'authentification (50), la partie d'actionnement principale (61) étant prévue dans le véhicule à selle (10) de manière à être au moins partiellement exposée à l'extérieur du véhicule à selle (10),
le système d'authentification de véhicule à selle (C) étant configuré de sorte que l'état du système d'authentification de véhicule à selle (C) puisse être commuté d'un état verrouillé du guidon (Q1) à un état désactivé (Q2), et de l'état désactivé (Q2), en passant par au moins un état de vérification d'authentification (Q3) et un état d'authentification vérifiée (Q4), à un état activé d'unité de propulsion (Q5),
dans lequel
l'état désactivé (Q2) est un état entré par une transition de l'état verrouillé du guidon (Q1), la transition étant provoquée par un déplacement de la partie d'actionnement principale (61), le déplacement étant provoqué en réponse à une charge générée par un actionnement appliqué à la partie d'actionnement principale (61) à l'état verrouillé du guidon (Q1), l'état désactivé (Q2) étant un état dans lequel une source d'alimentation de l'unité de commande d'unité de propulsion (30) est désactivée et aucune authentification n'est effectuée par l'unité de commande d'authentification (50),
l'état de vérification d'authentification (Q3) est un état entré par une transition de l'état désactivé (Q2), la transition étant provoquée par un déplacement de la partie d'actionnement principale (61), le déplacement étant provoqué en réponse à une charge générée par un actionnement appliqué à la partie d'actionnement principale (61) dans l'état désactivé (Q2), l'état de vérification d'authentification (Q3) faisant que l'unité de commande d'authentification (50) effectue une opération de vérification d'authentification,
l'état d'authentification vérifiée (Q4) est un état entré par une transition de l'état de vérification d'authentification (Q3), la transition étant provoquée par un déplacement de la partie d'actionnement principale (61), le déplacement étant provoqué en réponse à une charge appliquée à la partie d'actionnement principale (61) dans un état où l'authentification effectuée par l'unité de commande d'authentification (50) a été vérifiée à l'état de vérification d'authentification (Q3), l'état d'authentification vérifié (Q4) étant un état dans lequel la source d'alimentation de l'unité de commande d'unité de propulsion (30) est désactivée et l'authentification effectuée par l'unité de commande d'authentification (50) a été vérifiée, et
l'état désactivé d'unité de propulsion (Q5) est un état entré par une transition de l'état d'authentification vérifiée (Q4), la transition étant provoquée par un déplacement de la partie d'actionnement principale (61), le déplacement étant provoqué en réponse à une charge appliquée à la partie d'actionnement principale (61) à l'état d'authentification vérifiée (Q4), l'état activé d'unité de propulsion (Q5) étant un état dans lequel la source d'alimentation de l'unité de commande d'unité de propulsion (30) est activée et l'authentification effectuée par l'unité de commande d'authentification (50) a été vérifiée.

2. Système d'authentification de véhicule à selle (C) selon la revendication 1, dans lequel
l'état d'authentification vérifiée (Q4) est un état dans lequel le déplacement du véhicule à selle (10) est désactivé.

3. Système d'authentification de véhicule à selle (C) selon la revendication 1 ou 2, dans lequel
la partie d'actionnement principale (61) comporte un mécanisme de rotation configuré pour être entraîné en rotation en recevant un actionnement en rotation,
une rotation de la partie d'actionnement principale (61) fait que l'état du système d'authentification de véhicule à selle (C) soit commuté de l'état de vérification d'authentification (Q3) à l'état d'authentification vérifiée (Q4), la rotation étant provoquée en réponse à un actionnement en rotation appliqué à la partie d'actionnement principale (61) à l'état où l'authentification effectuée par l'unité de commande d'authentification (50) a été vérifiée à l'état de vérification d'authentification (Q3).

4. Système d'authentification de véhicule à selle (C) selon l'une quelconque des revendications 1 à 3, dans lequel
la partie d'actionnement principale (61) comporte une partie de blocage de déplacement principal (78, 781) configurée pour bloquer la partie d'actionnement principale (61) d'être déplacée par une charge appliquée à la partie d'actionnement principale (61) pour faire passer le système d'authentification de véhicule à selle (C) de l'état de vérification d'authentification (Q3) à l'état d'authentification vérifiée (Q4), le blocage étant effectué en fonction du résultat de l'authentification effectuée par l'unité de commande d'authentification (50),
après vérification de l'authentification effectuée par l'unité de commande d'authentification (50), la partie de blocage de déplacement principal (78, 781) est configurée pour libérer le blocage de la partie d'actionnement principale (61) d'effectuer un déplacement.

5. Système d'authentification de véhicule à selle (C) selon l'une quelconque des revendications 1 à 4, dans lequel
le système d'authentification de véhicule à selle (C) est configuré pour effectuer une réauthentification dans un laps de temps lorsque le système d'authentification de véhicule à selle (C) est à l'état activé d'unité de propulsion (Q5) après que l'état du système d'authentification de véhicule à selle (C) passe de l'état d'authentification vérifiée (Q4) à l'état activé d'unité de propulsion (Q5), la réauthentification comprenant l'authentification effectuée entre l'unité de commande d'authentification (50) et le dispositif portable (40) et une autre authentification effectuée entre l'unité de commande d'authentification (50) et l'unité de commande d'unité de propulsion (30),
l'unité de commande d'unité de propulsion (30) est configurée pour permettre le fonctionnement de l'unité de propulsion (22) après la vérification de la réauthentification,
le système d'authentification de véhicule à selle (C) est configuré pour permettre, jusqu'à ce que se soit écoulé un laps de temps prédéterminé depuis que l'état du système d'authentification de véhicule à selle (C) soit passé de l'état activé d'unité de propulsion (Q5) à l'état d'authentification vérifiée (Q4), que l'état du système d'authentification de véhicule à selle (C) retourne à l'état activé d'unité de propulsion (Q5) et permettre que l'unité de commande d'unité de propulsion (30) permette le fonctionnement de l'unité de propulsion (22) sans réauthentification.

6. Système d'authentification de véhicule à selle (C) selon l'une quelconque des revendications 1 à 5, comprenant une sous-partie d'actionnement (81, 82) disposée adjacente à la partie d'actionnement principale (61), la sous-partie d'actionnement (81, 82) étant configurée pour ouvrir une partie ouverte/fermée (23a, 28a) prévue dans le véhicule à selle (10) et pouvant être déplacée par une charge y appliquée, dans lequel
la partie d'actionnement principale (61) comporte une sous-partie de blocage (65, 66) disposée dans une position pour bloquer la sous-partie d'actionnement (81, 82) d'effectuer un déplacement lorsque la partie d'actionnement principale (61) se trouve dans une position correspondant à l'état de vérification d'authentification (Q3) ou à l'état désactivé (Q2),
la partie d'actionnement principale (61) est configurée de sorte qu'un déplacement de la partie d'actionnement principale (61) de la position correspondant à l'état de vérification d'authentification (Q3) à une position correspondant à l'état d'authentification vérifiée (Q4) fait que la sous-partie de blocage (65, 66) soit retirée de la position qui bloque la sous-partie d'actionnement (81, 82) d'effectuer un déplacement.

7. Véhicule à selle (10) comprenant:
le système d'authentification de véhicule à selle (C) selon l'une quelconque des revendications 1 à 6; et
une unité de propulsion (22) qui entraîne le véhicule à selle (10).
